(19) Europäisches Patentamt
European Patent Office
Office européen des brevets

(11) **EP 4 479 232 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **23790269.7**

(22) Anmeldetag: **13.10.2023**

(51) Internationale Patentklassifikation (IPC):
*B29C 45/76* $^{(2006.01)}$     *B29C 45/50* $^{(2006.01)}$

(52) Gemeinsame Patentklassifikation (CPC):
**B29C 45/76;** B29C 45/50; B29C 2045/5096;
B29C 2945/76568; B29C 2945/76605;
B29C 2945/76665; B29C 2945/76692;
B29C 2945/76846; B29C 2945/76933

(86) Internationale Anmeldenummer:
**PCT/EP2023/078489**

(87) Internationale Veröffentlichungsnummer:
**WO 2024/083675 (25.04.2024 Gazette 2024/17)**

(54) **ANTRIEBSSYNCHRONISIERTE DOSIERREGELUNG SOWIE DAMIT ARBEITENDE SPRITZGIESSMASCHINE**

DRIVE-SYNCHRONIZED METERING CONTROL AND INJECTION MOLDING MACHINE THAT IS OPERATED THEREWITH

COMMANDE DE MESURE SYNCHRONISÉE PAR MOTEURS ET MACHINE DE MOULAGE PAR INJECTION ACTIONNÉE EN FONCTION DE LADITE COMMANDE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.10.2022 DE 102022127090**

(43) Veröffentlichungstag der Anmeldung:
**25.12.2024 Patentblatt 2024/52**

(73) Patentinhaber: ARBURG GmbH + Co KG
**72290 Loßburg (DE)**

(72) Erfinder: **RUF, Thomas**
**78727 Oberndorf (DE)**

(74) Vertreter: **RPK Patenanwälte Reinhardt und Kaufmann**
**Partnerschaft mbB (Pforzheim)**
**Grünstraße 1**
**75172 Pforzheim (DE)**

(56) Entgegenhaltungen:
**JP-B1- 7 108 157     US-A1- 2021 178 649**

**Beschreibung**

Die vorliegende Erfindung betrifft ein Verfahren zur antriebssynchronisierten Dosierregelung in einer Spritzgießmaschine gemäß dem Oberbegriff des Anspruchs 1 und eine nach dem Verfahren arbeitende Spritzgießmaschine gemäß dem Oberbegriff des Anspruchs 11 sowie ein zur Durchführung des Verfahrens geeignetes Computerprogrammprodukt gemäß dem Oberbegriff des Anspruchs 12.

Der Begriff "plastifizierbares Material", wie er in dieser Anmeldung verwendet wird, ist weit zu verstehen und umfasst insbesondere, aber nicht nur, neben Kunststoffen oder auch Silikon oder anderen thermoplastischen und/oder elastomeren Werkstoffen z.B. keramische, metallische und/oder pulverige Massen ebenso wie Papier, Cellulose, Stärke, Kork, usw. sowie auch Mischmaterialen zwischen derartigen plastifizierbaren Materialien. Grundsätzlich kann es sich dabei auch um bereits zuvor plastifizierte Materialien oder auch plastische Massen handeln, die nach dem Ausbringen selbsttätig oder unter Einsatz von Hilfsmitteln aushärten. Der Begriff umfasst auch Recyclate.

Betrachtet wird ein Spritzgießprozess zur Verarbeitung plastifizierbaren Materials mithilfe einer Spritzgießmaschine mit zwei bewegbaren Formaufspannplatten und einer, zwischen den Formaufspannplatten angeordneten, Spritzgießform mit wenigstens einem Formhohlraum. Dabei wird das Material in einen temperierbaren und vorzugsweise in einer Spritzzylinderachse (Hauptachse) der Spritzgießmaschine axial bewegbaren Plastifizierzylinder der Spritzgießmaschine eingeführt und anschließend durch Rotation einer in der Hauptachse axial und um diese bewegbaren Förderschnecke innerhalb des Plastifizierzylinders durch Friktion und/oder Temperierung des Plastifizierzylinders plastifiziert bzw. aufgeschmolzen.

Durch Rotation der Förderschnecke in einer bestimmten Drehrichtung wird das plastifizierte bzw. aufgeschmolzene Material zur Förderschneckenspitze in einen Dosierraum innerhalb des Plastifizierzylinders befördert, wobei der Druck, den die Förderschnecke auf das Material ausüben soll, vorgegeben ist. Dabei wird ein über eine Steuerung der Spritzgießmaschine einstellbarer Staudruck auf die Förderschnecke eingeprägt. Durch die angesprochene Rotation und eingeprägten Druck wird die Förderschnecke axial zurückbewegt und üblicherweise zum Stillstand abgebremst (Dosieren).

Der vorgegebene Druck und der tatsächliche auf das Material ausgeübte Staudruck unterscheiden sich normalerweise bedingt durch dynamische und/oder geometrische Abhängigkeiten (z. B. Materialeigenschaften, Geometrien des Plastifizierzylinders und der Förderschnecke, Staudruck, Temperatur, etc.) vor der Förderschecke. Es ist bekannt, zur zusätzlichen Druckentlastung bzw. Dekomprimierung des plastifizierten bzw. aufgeschmolzenen Materials nach dem Dosieren die Förderschnecke axial in der Hauptachse zurück zu bewegen und/oder um die Hauptachse entgegengesetzt zurück zu drehen. Dabei werden zunächst Prozessparameter, wie z. B. Schneckenweg, Staudruck, Drehzahl, Weg der Förderschnecke, Weg des Plastifizierzylinders und Rücklaufgeschwindigkeit des Materials infolge des Staudruckes in einer Parametererfassungseinheit erfasst. Diese werden über eine Kommunikationsschnittstelle in einem Datenspeicher einer Steuerung der Spritzgießmaschine hinterlegt. Bei einem unkontrollierten axialen Zurückbewegen und/oder Zurückdrehen kann es vorkommen, dass wegen der oben bereits genannten dynamischen und/oder geometrischen Abhängigkeiten, das plastifizierte bzw. aufgeschmolzene Material zu fehlerhaften Formteilen (z. B. Überfließen oder Lunkerbildung) führt. Dies wirkt sich somit negativ auf die Konstanz des Gewichts des Formteils aus. Bei rein linearer Dekompression, also Zurückziehen der Förderschnecke, kann das Gewicht erhöht und bei ausschließlichem Zurückdrehen der Förderschnecke kann das Gewicht vermindert sein.

In der US 5 002 717 A ist ein Verfahren beschrieben, das das Einspritzen eines geschmolzenen Harzes durch eine Inline-Spritzgießmaschine vom Schneckentyp steuert. Die Formmaschine ist mit einem Kontrollring ausgestattet, um das Einspritzen des geschmolzenen Harzes durch Vorrücken der Schnecke zu ermöglichen und auch um zu verhindern, dass das geschmolzene Harz zurückfließt. Gemäß dem Verfahren wird die Schnecke in der normalen Richtung gedreht, um ein Harzmaterial zu kneten und zu plastifizieren und ferner das resultierende geschmolzene Harz dem freien Endabschnitt der Schnecke zuzuführen. Die Schnecke zieht sich dann zurück, um eine vorbestimmte Menge des geschmolzenen Harzes neben dem freien Endabschnitt der Schnecke zu dosieren und zu speichern. Die Schnecke wird als nächstes in die umgekehrte Richtung gedreht, bis der Druck des geschmolzenen Harzes auf der Rückseite des Kontrollrings niedriger ist als der des geschmolzenen Harzes, das so dosiert und auf der Vorderseite des Kontrollrings gespeichert wird. Die Schraube zieht sich zurück, um den Druck des Harzes auf der Vorderseite des Kontrollrings zu verringern, wodurch ein Dekompressionshub ausgeführt wird. Die Schnecke rückt schließlich vor, um das geschmolzene Harz in eine Form einzuspritzen. Mittels des Verfahrens zum Steuern des Einspritzens durch eine Spritzgussmaschine soll eine stabile Produktion geformter Artikel ermöglicht werden, das immer eine konstante Einspritzmenge eines Harzes ohne Schwankungen der dosierten Harzmengen sicherstellt, selbst wenn ein Dekompressionsvorgang durchgeführt wird.

Die EP 1 465 761 A1 beschreibt ein Verfahren zum Regeln des Dosiervorgangs einer Spritzgießmaschine und insbesondere das Anfahren einer Dosierstellung der Schnecke am Ende des Dosiervorgangs. Erfindungsgemäß wird eine Bremsstrecke abhängig von der axialen Rückzugsgeschwindigkeit der Schnecke ermittelt, wobei die Axialgeschwindigkeit während der Bremsstrecke so vermindert wird, dass die Schnecke exakt eine Endposition erreicht. Dazu wird die Drehzahl der Schnecke abhängig von der aktuellen axialen Rückzugsgeschwindigkeit der Schnecke variiert. Auf diese Weise können Nicht-Linearitäten bei einer Veränderung der Drehzahl im Vergleich zu einer Veränderung der axialen Rückzugsgeschwindigkeit ausgeglichen werden. Das Ziel ist es, ein Verfahren zum Regeln des Dosiervorgangs einer Spritzgießmaschine anzugeben, bei dem eine Schneckenendstellung (Dosierposition) immer exakt erreicht werden kann

Die DE 10 2020 124 316 A1 offenbart eine Steuervorrichtung und ein Steuerverfahren für eine Spritzgießmaschine einschließlich eines Zylinders, in den ein Harz zugeführt wird, und einer Schnecke, die sich vorwärts und rückwärts bewegt und sich innerhalb des Zylinders dreht. Sie enthält eine Dosiersteuereinheit, die basierend auf vorbestimmten Dosierbedingungen das Dosieren des Harzes innerhalb des Zylinders durch das Steuern der Vorwärtsdrehung und der Rückwärtsbewegung der Schnecke durchführt, bis die Schnecke rückwärts in eine vorbestimmte Dosierposition bewegt wurde, eine Erfassungseinheit für die Rückwärtsbewegungsgeschwindigkeit, die eine Rückwärtsbewegungsgeschwindigkeit der Schnecke erfasst, eine Geschwindigkeitsbestimmungseinheit, die basierend auf der Rückwärtsbewegungsgeschwindigkeit, die während des Dosierens von der Erfassungseinheit für die Rückwärtsbewegungsgeschwindigkeit bestimmt wird, eine Rücksauggeschwindigkeit bestimmt, um zu bewirken, dass ein Harzdruck einen Zieldruck erreicht, und eine Rücksaugsteuereinheit, die bewirkt, dass sich die Schnecke basierend auf der Rücksauggeschwindigkeit weiter rückwärts bewegt, nachdem die Schnecke die vorbestimmte Dosierposition erreicht hat. Es soll damit eine Steuervorrichtung und ein Steuerverfahren für eine Spritzgießmaschine bereitgestellt werden, bei denen die Rücksauggeschwindigkeit angemessen und leicht bestimmt werden kann, um Formfehler innerhalb des herzustellenden Gegenstands zu vermeiden.

Aus der DE 10 2020 003 905 A1 ist eine Spritzgießmaschine bekannt, die Folgendes umfasst: eine erste Antriebsvorrichtung, die eine im Inneren eines Heizzylinders vorgesehene Schnecke dreht; eine zweite Antriebsvorrichtung, die die Schnecke vorwärts und rückwärts bewegt, einen Dosiersteuerabschnitt, der dazu konfiguriert ist, durch Steuern der ersten Antriebsvorrichtung und der zweiten Antriebsvorrichtung Harz zu dosieren, während das Harz geschmolzen wird, und danach die Schnecke rückwärts zu drehen, um dadurch den Harzdruck zu reduzieren; eine erste Sensoreinheit zum Erfassen des Drucks; eine zweite Sensoreinheit zum Erfassen einer oder mehrerer Arten von physikalischen Größen, die die Druckänderung beeinflussen; und einen Vorhersageabschnitt, der Informationen zu der dekomprimierenden Drehung beruhend auf dem von der ersten Sensoreinheit erfassten Druck und der einen oder den mehreren von der zweiten Sensoreinheit erfassten Arten von physikalischen Größen vorhersagt. Der Dosiersteuerabschnitt steuert die erste Antriebsvorrichtung beruhend auf den durch den Vorhersageabschnitt vorhergesagten Informationen zu der dekomprimierenden Drehung. Das Ziel ist die Bereitstellung einer Spritzgießmaschine, die den Druck des geschmolzenen Harzes optimal reduziert.

Die WO 2022/102637 A1 zeigt eine Steuervorrichtung für eine Spritzgießmaschine mit einer Rücksaug-Steuereinheit, die bewirkt, dass eine Schnecke, die eine vorgeschriebene Messposition erreicht hat, mit einer vorgeschriebenen Rücksauggeschwindigkeit zurückgesaugt wird. Eine Rückwärtsdrehungs-Steuereinheit ist vorgesehen, die bewirkt, dass die Schnecke auf der Grundlage eines vorgeschriebenen Rückwärtsdrehungs-Zustandswertes bei und nach dem Beginn des Rücksaugens rückwärts gedreht wird. Eine Messeinheit misst einen Wert für den Rückwärtsdrehungszustand der Schraube. Eine Steuereinheit zur Beendigung der Rücksaugung veranlasst die Beendigung der Rücksaugung, wenn der Zustandswert der Rückwärtsdrehung einen Schwellenwert erreicht hat.

Aus der DE 10 2020 005 573 A1 ist eine Steuerungsvorrichtung für eine Spritzgießmaschine bekannt, die ausgestattet ist mit: einer Druckerfassungseinheit, die einen Druck eines Materials erfasst, einer Rückwärtsdrehungssteuerungseinheit, die bewirkt, dass eine Schnecke rückwärts gedreht wird, nachdem die Schnecke eine vorbestimmte Dosierposition erreicht hat, einer Messeinheit, die eine verstrichene Zeit oder einen Drehbetrag der Schnecke misst, vom Erreichen einer vorbestimmten Dosierposition durch die Schnecke, und einer Steuerungseinheit für eine Bewegung nach hinten, die ein Zurücksaugen der Schnecke auf eine überlappende Weise mit der Rückwärtsdrehung der Schnecke einleitet, falls eine vorbestimmte Zeit für die Einleitung einer Bewegung nach hinten verstrichen ist oder die Schnecke um einen vorbestimmten Drehbetrag für die Einleitung einer Bewegung nach hinten gedreht worden ist, vom Erreichen der vorbestimmten Dosierposition durch die Schnecke.

Die US 2021/178649 A1 offenbart eine Steuereinrichtung für eine Spritzgießmaschine mit einem Zylinder, in den ein Harz zugeführt wird, und einer Schnecke, die sich innerhalb des Zylinders vorwärts und rückwärts bewegt und dreht. Die Steuereinrichtung weist eine Rücksaug-Steuereinheit auf, die die Schnecke auf der Grundlage einer vorbestimmten Rücksauggeschwindigkeit, einer Rücksaugstrecke oder einer Rücksaugzeitdauer zurücksaugt. Weiterhin weist die Steuereinrichtung eine Druckerfassungseinheit auf, die einen Druck des Harzes erfasst, eine Berechnungseinheit, die einen Kompensationsbetrag der Rücksauggeschwindigkeit auf der Grundlage einer Differenz zwischen dem Druck des Harzes zu einem Zeitpunkt, zu dem das Zurücksaugen abgeschlossen ist, und einem vorbestimmten Zieldruck berechnet, und eine Geschwindigkeitsbestimmungseinheit, die die Rücksauggeschwindigkeit auf der Grundlage des Kompensationsbetrags neu bestimmt. Die Aufdosierung des Harzes wird aufgrund des Erreichens einer bestimmten Position der Schnecke unter Berücksichtigung des Drucks auf die aufdosierte Menge des Harzes beendet. Danach wird zur Druckentlastung des aufdosierten Harzes unter Berücksichtigung eines Materialparameters der Kompensationsbetrag der Rücksauggeschwindigkeit berechnet und die Druckentlastung durch axiales Verschieben der Schnecke durchgeführt. Eine sequentielle oder gleichzeitige rückwärts gerichtete Drehbewegung der Schnecke während der Druckentlastung findet nicht statt.

Aus der JP 7 108 157 B1 ist eine Steuervorrichtung zum Steuern einer Schnecke einer Spritzgießmaschine bekannt, die eine Dekompressionssteuereinheit zum Verringern des Drucks eines Harzes auf der Grundlage eines vorbestimmten Dekompressionsbedingungswerts umfasst, nachdem das Harz aufdosiert wurde. Weiterhin umfasst sie eine erste Messeinheit zum Messen der auf die Schnecke aufgrund des Einspritzens des Harzes ausgeübten Last und eine zweite Messeinheit zum Messen einer Zeit vom Beginn eines Injektionsvorgangs durch die Schnecke, bis die Last einen ersten Schwellenwert erreicht. Außerdem umfasst sie eine Dekompressionsbedingungskorrektureinheit zum Korrigieren des vorbestimmten Dekompressionsbedingungswerts auf der Basis einer Differenz zwischen der Zeit und einem zweiten Schwellenwert. Die Dosiermenge wird aufgrund des Erreichens einer bestimmten Position der Schnecke unter Berücksichtigung des Drucks auf die aufdosierte Menge des Harzes eingestellt. Die Korrektur des Dekompressionsbedingungswerts wird unter Berücksichtigung eines Materialparameters durchgeführt. Dabei wird mindestens ein Wert einer Rückdrehzeit, eines Rückdrehbetrags, einer Rückdrehgeschwindigkeit, einer axialen Rücklaufzeit, eines axialen Rücklaufwegs oder einer axialen Rücklaufgeschwindigkeit angepasst, wobei die Schnecke gleichzeitig zurückgedreht und axial zurückgezogen wird während der Druckentlastung der aufdosierten Menge nach deren Aufdosierung.

Keine der oben genannten Schriften löst in zufriedenstellender Form das Problem, ein homogenes und gewichtskonstantes Formteil herzustellen, da entweder ein sequentielles Zurückfahren der Förderschnecke mit ggf. anschließendem Zurückdrehen der Förderschnecke erfolgt oder das Zurückfahren und das Zurückdrehen der Förderschecke zwar koordiniert in Hinblick auf den Staudruck erfolgt, jedoch andere relevante Prozessparameter unberücksichtigt bleiben.

Erster Punkt ist dabei, dass vor dem Ablauf einer Dekompression bzw. Druckentlastung (unabhängig ob axial oder rotativ ausgeführt) die Ausgangsvoraussetzungen beim Beenden des Dosiervorganges nicht exakt definiert sind bzw. nicht optimal für ein definiertes Beenden geschaffen sind. Während des Dosiervorganges unterliegen die gemessenen Istwerte wie beispielsweise Drehmoment oder Staudruck einer dynamischen Überlagerung beeinflusst unter anderem durch Materialkennwerte (wie. z.B. Staubanteil, Granulatform, Materialviskosität, Materialtype oder Materialklasse). Daher entsprechen die an der Sensorik gemessenen Werte nicht den real in der plastifizierten Masse vorliegenden Daten und sind auch noch abhängig von Materialkennwerten, die Schwankungen unterliegen können.

Ein weiterer Punkt ist das Thema einer sequentiellen Druckentlastung durch axiale und rotative Druckentlastung. In den bekannten Verfahren wird entweder rein axial der Druck entlastet oder über Rotation der Druck entlastet bzw. wird die Kombination von beiden bestenfalls als sequentielle Abfolge beschrieben. Dies bewirkt die Problematik, dass bei rein axialer Dekompression am Ende des Dosierens der eingespannte Druck sich entlastet und somit die Dosiermenge sich passiv (abhängig von zuvor vorhandenen dynamischen Effekten und Materialkennwerten, Verschleiß an Plastifizierbauteilen und vielem mehr) erhöht. Wird zuvor ein dynamisch unverfälschter Betriebspunkt angefahren, können zumindest die dynamischen Effekte eliminiert werden.

Um die weiteren Einflussfaktoren zu eliminieren, reicht dies nicht aus. Nachdem der Druck sich entspannt hat, ist immer noch eine Erhöhung des aufdosierten Volumens zu beobachten. Daher wird auch im drucklosen Zustand bei axialer Verschiebung der Förderschnecke über dynamisch-rheologische Effekte das aufdosierte Volumen weiter erhöht.

Wird jetzt allerdings der Druck rotativ entlastet, so ergibt sich mit ansteigendem Drehwinkel eine immer geringeres aufdosiertes Volumen. Beide Effekte sind abhängig von Materialkennwerten und anderen äußeren Faktoren, die selbst Schwankungen unterliegen und beeinflussen somit die Konstanz des aufdosierten Volumens negativ.

Der Erfindung liegt daher die Aufgabe zugrunde, ein Verfahren und eine nach dem Verfahren arbeitende Spritzgießeinheit einer Spritzgießmaschine anzugeben, bei denen eine axiale Bewegung der Förderschnecke als auch deren Drehbewegung am Ende des Dosiervorgangs unter Berücksichtigung der dafür relevanten Prozessparameter aufeinander abgestimmt durchgeführt werden, so dass ein homogenes und gewichtskonstantes Formteil herstellbar ist.

Diese Aufgabe wird durch ein Verfahren gemäß den Merkmalen des Patentanspruchs 1 gelöst.

Dabei handelt es sich um ein Verfahren zur antriebssynchronisierten Dosierregelung in einer Spritzgießmaschine mit einem temperierbaren Plastifizierzylinder, dem plastifizierbares Material zugeführt wird, das darin plastifiziert wird und das anschließend in einem Dosierraum des Plastifizierzylinders unter Berücksichtigung erster Prozessparameter, insbesondere eines Staudrucks und einer Rücklaufgeschwindigkeit des Materials infolge des Staudruckes, durch axiale Bewegung und Drehbewegung einer Förderschnecke dosiert wird, mit den Schritten gemäß dem kennzeichnenden Teil des Anspruches 1. In vorteilhafter Weise ist dadurch ein homogenes und gewichtskonstantes Formteil herstellbar. Insbesondere durch das zweistufige Zurückdrehen der Förderschnecke während der Druckentlastung und Dekompression wird einer Gewichtszunahme des Formteils entgegengewirkt, wohingegen durch das gleichzeitige Zurückfahren der Förderschnecke einer Gewichtsabnahme entgegengewirkt wird.

Die Aufgabe wird auch gelöst durch eine Spritzgießeinheit einer Spritzgießmaschine gemäß den Merkmalen des Patentanspruchs 11, die geeignet ist, das Verfahren auszuführen.

Vorteilhafte Weiterbildungen sind Gegenstand der abhängigen Patentansprüche.

Bevorzugt lässt sich das von dynamischen Überlagerungen der weiteren Prozessparameter unabhängige Aufdosieren der vorbestimmten Dosiermenge während des Stoppens des Dosiervorgangs entweder besonders gut dadurch erreichen, dass die Sollkurven der Antriebe in ihrer Form frei wählbar sind, oder auch dadurch, dass sowohl die Sollkurve des Antriebs zum axialen Bewegen der Förderschnecke als auch die Sollkurve des Antriebs zum Drehen der Förderschnecke variabel angepasst werden.

Das Druckentlasten der vorbestimmten Dosiermenge im Dosierraum kann bevorzugt durch gleichzeitige axiale Bewegung der Förderschnecke und Drehen der Förderschnecke mit der ersten Solldrehzahl erfolgen, um dadurch vorteilhaft mit beiden Antrieben die Druckentlastung anzusteuern.

Vorzugsweise lassen sich die Sollwertverläufe der ersten und weiteren Prozessparameter bestimmen aus:

- mathematischen Funktionen,
- Filterung von Stufenformen oder sonstiges Signalverläufen,
- Beschränkungen der maximalen Änderungsrate des Signales, der ersten, der zweiten und der dritten Ableitung.

So lassen sich vorteilhaft schnell und mit geringem Rechenaufwand entsprechende Verläufe von Zyklus zu Zyklus an die Randbedingungen wie z.B. sich ändernde Materialkennwerte anpassen.

Bevorzugterweise können der Antrieb zum Drehen und der Antrieb zum axialen Bewegen der Förderschnecke so miteinander synchronisiert werden, dass synchronisiert ablaufende Bewegungen der Förderschnecke gekoppelt, voneinander abhängig und/oder aufeinander synchronisiert sind. Dadurch kann vorteilhaft gezielt ein sanfter Zielpunkt am Ende des Dosierens erreicht werden, zu dem die Bewegungen der Förderschnecke enden.

Bei anderen bevorzugten Ausführungsformen des Verfahrens, die es ermöglichen, die Genauigkeit des Dosierens noch weiter zu erhöhen, ist der Betrag der zweiten Solldrehzahl niedriger als der Betrag der ersten Solldrehzahl. Alternativ wird eine axiale Geschwindigkeit der Förderschnecke während der Drehung mit der ersten Solldrehzahl auf null oder einen vorbestimmten positiven Wert eingestellt.

Vorzugsweise umfassen die weiteren Prozessparameter wenigstens einen Materialkennwert wie eine Granulatform, einen Staubanteil des plastifizierbaren Materials, eine Materialviskosität, eine Materialtype oder eine Materialklasse, um vorteilhaft ein homogenes und gewichtskonstantes Formteil unter Berücksichtigung der spezifischen Materialeigenschaften herzustellen.

Bevorzugterweise können die weiteren Prozessparametern aber auch wenigstens einen der folgenden Prozessparameter umfassen: eine Förderschneckengeometrie, einen Förderschneckenverschleiß, eine Rückstromsperrengeometrie. Durch die dadurch vorteilhaft gegebene Berücksichtigung der geometrischen Verhältnisse und Rahmenbedingungen lässt sich die Dosiermenge vorteilhaft zum Erhalt gleichbleibend qualitativ guter Spritzgießteile optimieren.

Ebenfalls wird die Aufgabe durch ein Computerprogrammprodukt gelöst. Für eine schnelle, sichere und verlässliche Dosierbewegung ist das Computerprogrammprodukt mit einem Programmcode versehen, der auf einem computerlesbaren Medium gespeichert ist, zur Durchführung des oben beschriebenen Verfahrens mittels der oben beschriebenen Spritzgießeinheit.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Erfindung wird nun anhand eines Ausführungsbeispiels näher erläutert. Es zeigen:

| | |
|---|---|
| Fig. 1 | eine Darstellung des Plastifizierzylinders und seiner Antriebe, |
| Fig. 2 | ein schematisches Blockschaltbild mit Plastifizierzylinder und Steuereinheit der Spritzgießeinheit, |
| Fig. 3a - 3c | verschiedene Verläufe der linearen Geschwindigkeit und der Drehzahl der Förderschnecke sowie des Staudrucks im Dosierraum, |
| Fig. 4a | einen Regelablauf gemäß einem ersten Ausführungsbeispiel, |
| Fig. 4b, 4c | Kurvenverläufe der Rücklaufgeschwindigkeit und des Bremsverhaltens bei der Ausführungsform gemäß Fig. 4a, |
| Fig. 5 | einen Regelablauf gemäß einem zweiten Ausführungsbeispiel, |
| Fig. 6a - 6c | Kurvenverläufe betreffend die Änderung des Formteilgewichts über der Zeit des Dekompressionshubs und/oder des Rückdrehwinkels, |

Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

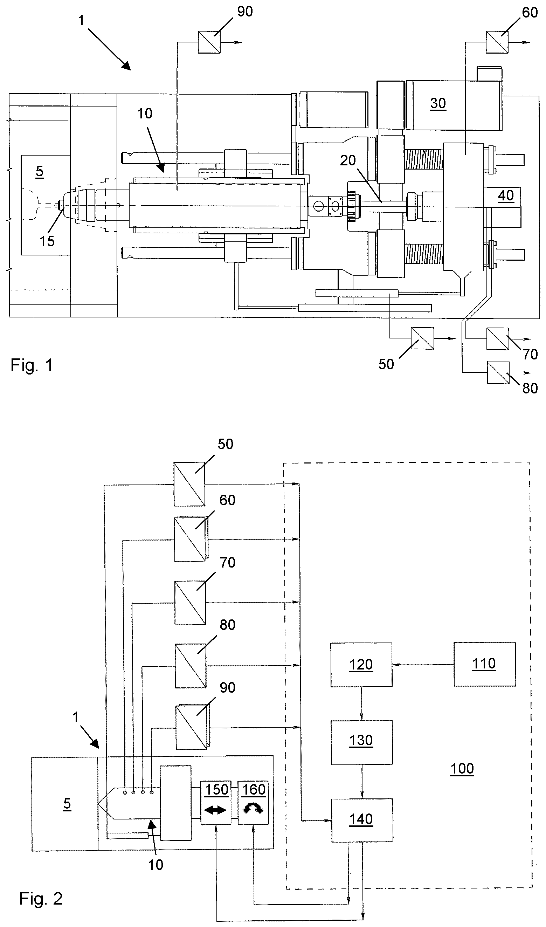

Fig. 1 zeigt eine Spritzgießeinheit 1 mit einer Spritzgießform 5, einem Plastifizierzylinder 10, einer Förderschnecke 20, einem Antrieb 30 zum axialen Bewegen der Förderschnecke 20 und einem Antrieb 40 zum Drehen der Förderschnecke 20. Weiterhin weist sie einen Förderschnecken-Absolutweg-Messwandler 50 zur Umsetzung eines absoluten axialen Wegs der Förderschnecke in ein elektrisches Signal, Messwandler 60 zur Umsetzung einer Drehzahl bzw. Drehwinkels der Förderschnecke 20 in elektrische Signale, einen Messwandler 70 zur Umsetzung eines Staudrucks in einem Dosierraum vor einem freien Ende der Förderschnecke 20 in ein elektrisches Signal und einen Messwandler zur Umsetzung der Rücklaufgeschwindigkeit des Materials infolge des Staudrucks in ein elektrisches Signal auf. Alternativ kann das Signal des Messwandlers 50 (Weg) abgeleitet werden, um daraus die Rücklaufgeschwindigkeit zu bestimmen.

Außerdem sind Messwandler 90 zur Umsetzung zusätzlicher erster Prozessparameter, beispielsweise eines Plastifizierzylinderwegs und einer Temperatur des Plastifizierzylinders 10 bzw. des Materials vorgesehen, die in bereits bekannten Verfahren bzw. Spritzgießmaschinen mit entsprechenden Verfahren zum Stoppen der Antriebe 30, 40 verwendet werden. Die Messwandler 90 dienen auch zur Umsetzung weiterer Prozessparameter in elektrische Signale, wie beispielsweise eine Materialviskosität des plastifizierbaren Materials, eine Granulatform und einen Staubanteil des plastifizierbaren Materials, eine Förderschneckengeometrie, einen Förderschneckenverschleiß und eine Rückstromsperrengeometrie einer in der Nähe des freien Endes der Förderschnecke angeordneten Rückstromsperre.

Fig. 2 zeigt ein schematisches Blockschaltbild der Spritzgießeinheit 1 mit einer Spritzgießform 5, einem Plastifizierzylinder 10, den Messwandlern 50, 60, 70, 80, 90 und einer Steuereinheit 100. Darin abgebildet sind auch ein Motorsteller 150 für den Antrieb 30 zum axialen Bewegen der Förderschnecke 20 und ein Motorsteller 160 für den Antrieb 40 zum Drehen der Förderschnecke 20. Weiterhin sind abgebildet Einstellmittel 110 für Kraft, Geschwindigkeit, Drehzahl, Druck, etc., Speichermittel 120 zum Speichern eingestellter Werte, Mittel 130 zur Berechnung eines Sollwertverlaufs und Vergleichsmittel 140 zum Vergleichen von Ist- und Soll-Werten, die Bestandteile der Steuereinheit 100 sind.

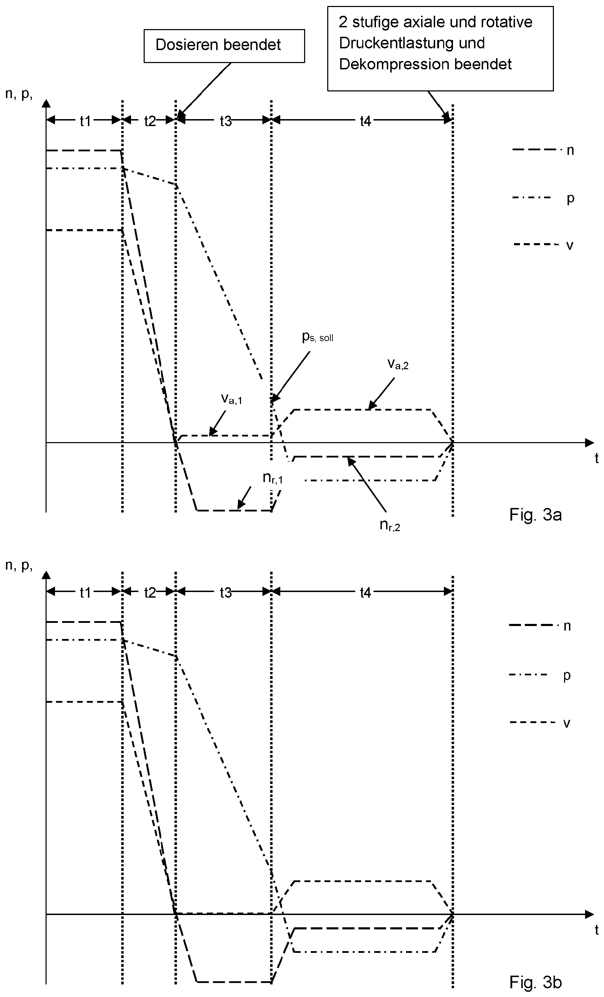

Fig. 3a und 3b zeigen Verläufe der Sollkurven der axialen Bewegungsgeschwindigkeit v der Förderschnecke 20 und der Drehzahl n der Förderschnecke sowie den daraus resultierenden Staudruck p im Dosierraum vor einem freien Ende der Förderschnecke 20.

In dem erfindungsgemäßen Verfahren zur antriebssynchronisierten Dosierregelung in einer Spritzgießmaschine wird eine Spritzgießeinheit 1 verwendet mit einem temperierbaren Plastifizierzylinder 10 mit einer axialen Achse, der eine Materialaufnahme und an einem davon beabstandeten Bereich eine Materialaustragsdüse 15 aufweist und in dem eine entlang der axialen Achse bewegbare und um diese drehbare Förderschnecke 20 mit einer Rückstromsperre angeordnet ist. Die Materialaufnahme kann an einem Ende und die Materialaustragsdüse 15 an einem dazu gegenüberliegenden Ende des Plastifizierzylinders 10 vorgesehen sein. Grundsätzlich kann der Plastifizierzylinder in einer Zylinderachse der Spritzgießmaschine axial bewegbar sein, um z.B. eine Materialaustragsdüse 15 an einem Spritzgießwerkzeug anzulegen.

Das Verfahren umfasst die Schritte:

- Zuführen plastifizierbaren Materials, wie insbesondere eines Granulats, in die Materialaufnahme des Plastifizierzylinders 10,

- Plastifizieren des Materials durch Drehen der Förderschnecke 20 und der dadurch entstehenden Friktionswärme und/oder Temperierung des Plastifizierzylinders 10,

- Fördern des plastifizierten Materials in einen Dosierraum des Plastifizierzylinders 10 vor ein freies Ende der Förderschnecke 20 durch Drehen der Förderschnecke 20 in einer ersten Richtung, wobei sich ein Staudruck in dem Dosierraum bildet, wodurch die Förderschnecke 20 axial von der Materialaustragsdüse 15 wegbewegt und ein Dosiervorgang eingeleitet wird,

- Erfassen und Speichern von ersten Prozessparametern in einer Steuereinheit 100 der Spritzgießeinheit 1, insbesondere eines Förderschnecken-Absolutwegs, einer Drehzahl der Förderschnecke 20, eines Drehwinkels der Förderschnecke 20, eines Plastifizierzylinderwegs, des Staudrucks, einer Rücklaufgeschwindigkeit des Materials infolge des Staudrucks und einer Temperatur des Plastifizierzylinders 10.

- Erfassen und Speichern und/oder Bereitstellen von weiteren Prozessparametern in der Steuereinheit 100, die vom zu plastifizierenden Material abhängig sind,

- Auswerten der ersten und weiteren Prozessparameter zur Bestimmung des Erreichens einer vorbestimmten Dosiermenge in dem Dosierraum und infolge dessen Stoppen des Dosiervorgangs durch synchronisiertes Beenden der Drehung und axialen Bewegung der Förderschnecke 20,

- ein- oder mehrfaches Druckentlasten der vorbestimmten Dosiermenge im Dosierraum durch axiale Bewegung der Förderschnecke 20 und/oder Drehen der Förderschnecke 20 mit einer ersten Solldrehzahl in eine der ersten Richtung entgegengesetzten zweiten Richtung bis zu einem Zieldrehwinkel der Förderschnecke 20 und/oder einem Zielstaudruck im Dosierraum, und

- ein- oder mehrfaches Dekomprimieren der vorbestimmten Dosiermenge in dem Dosierraum durch gleichzeitige axiale Bewegung der Förderschnecke 20 und Drehen der Förderschnecke 20 mit einer zweiten Solldrehzahl in die zweite Richtung bis zu einer vorbestimmten oder vorbestimmbaren Position in einer Zielentfernung der Förderschnecke 20 von der Materialaustragsdüse 15 und/oder in einer Zielentfernung von einer zuvor erfassten Position der Förderschnecke,

- wobei jeweils ein Antrieb zum Drehen 40 und ein Antrieb 30 zum axialen Bewegen der Förderschnecke unter Berücksichtigung von jeweils mindestens einem Istwert der ersten und der weiteren Prozessparameter so miteinander synchronisiert werden, dass ein von dynamischen Überlagerungen der weiteren Prozessparameter unabhängiges Aufdosieren der vorbestimmten Dosiermenge und ein gleichzeitiges Stoppen beider Antriebe 30, 40 am Ende des Dosiervorgangs erfolgen, wobei das Stoppen der beiden Antriebe 30, 40 abhängig von der Rücklaufgeschwindigkeit des Materials eingeleitet und entweder in Echtzeit oder bei Beginn des Stoppvorgangs mit in Abhängigkeit von den Istwerten ermittelten Sollkurven der Antriebe 30, 40 synchronisiert wird und wobei mindestens die Sollkurve einer der beiden Antriebe 30, 40 variabel angepasst wird.

In einer bevorzugten Ausführungsform kann das Druckentlasten der vorbestimmten Dosiermenge im Dosierraum durch gleichzeitige axiale Bewegung der Förderschnecke 20 und Drehen der Förderschnecke 20 mit der ersten Solldrehzahl erfolgen. Grundsätzlich kann aber ein gleichzeitige Stoppen beider Antriebe auch dann erfüllt sein, wenn beim Halten sich ein Antrieb zu diesem Zeitpunkt bereits in einem Haltezustand befindet.

Zunächst wird somit das plastifizierbare Material, insbesondere in Form von Granulat, in die Materialaufnahme des Plastifizierzylinders 10 zugeführt. Danach wird das Material durch Drehen der Förderschnecke 20 in eine erste Richtung und der dadurch entstehenden Friktionswärme und/oder durch Temperierung des Plastifizierzylinders 10 plastifiziert und während der Zeitdauer t1 vor ein freies Ende der Förderschnecke 20 in einen Dosierraum des Plastifizierzylinders 10 bewegt. Dabei baut sich ein Staudruck im Dosierraum auf, wodurch die Förderschnecke 20 axial zurückbewegt wird. Das Fördern des plastifizierten Materials in den Dosierraum kann mit einer vorbestimmten Drehzahl und einem vorbestimmten Dosierweg erfolgen.

Als erste Prozessparameter werden z. B. wenigstens ein Prozessparameter umfassend einen Förderschnecken-Absolutweg, eine Drehzahl der Förderschnecke 20, einen Drehwinkel der Förderschnecke 20, einen Weg der Förderschnecke 20, einen Staudruck, eine Rücklaufgeschwindigkeit des Materials infolge des Staudrucks oder eine Temperatur des Plastifizierzylinders 10 erfasst und in einer Steuereinheit 100 der Spritzgießeinheit 1 gespeichert.

Als weitere Prozessparameter werden materialabhängig Parameter wie z. B. eine Granulatform oder ein Staubanteil des plastifizierbaren Materials, eine Materialviskosität, eine Materialtype, eine Materialklasse, erfasst und in der Steuereinheit 100 gespeichert. Weitere Prozessparameter können auch eine Förderschneckengeometrie, ein Förderschneckenverschleiß oder eine Rückstromsperrengeometrie sein, die erfasst und in der Steuereinheit 100 gespeichert werden.

Anschließend werden die ersten und weiteren Prozessparameter zur Bestimmung des Erreichens einer vorbestimmten Dosiermenge in dem Dosierraum ausgewertet und infolge dessen ein Antrieb 30 zum axialen Bewegen der Förderschnecke 20 sowie ein Antrieb 40 zum Drehen der Förderschnecke 20 während der Zeitdauer t2 zum Stoppen des Dosierens synchronisiert gestoppt.

Am Ende des Dosierens nach dem Zeitraum t2 wird im Zeitraum t3 zur Druckentlastung bzw. Dekompression des Materials im Dosierraum die Förderschnecke 20 in eine der ersten Richtung entgegengesetzten Richtung mit einer ersten Drehzahl gedreht, wobei die axiale Geschwindigkeit der Förderschnecke 20 darauf synchronisiert wird. Im Zeitraum t4 wird die Dekompression des Materials im Dosierraum fortgeführt, wobei die Förderschnecke 20 mit einer zweiten Drehzahl weitergedreht wird und die axiale Geschwindigkeit der Förderschnecke 20 darauf synchronisiert wird. Bei der Druckentlastung bzw. Dekompression wird jeweils die axiale Geschwindigkeit der Förderschnecke 20 so auf die Drehzahl der Förderschnecke 20 synchronisiert, dass keine dynamischen Verfälschungen innerhalb der Dosiermenge entstehen, die zu einem späteren Überfließen oder zu einer Lunkerbildung innerhalb des zu erzeugenden Formteils führen.

In einer weiteren Ausführungsform kann ebenso die Solldrehzahl der Förderschnecke 20 auf die axiale Geschwindigkeit der Förderschnecke synchronisiert werden. Das Rückdrehen mit unterschiedlichen Drehzahlen und Anpassen der axialen Geschwindigkeit der Förderschnecke 20 während der Druckentlastung bzw. Dekompression erfolgt somit in wenigstens zwei Stufen. Grundsätzlich können auch mehr als zwei Stufen vorgesehen sein, wobei bedarfsweise eine Verringerung aber auch eine Erhöhung der Drehzahl von Schritt zu Schritt erfolgen kann.

Unter einem "ein- oder mehrfachen Druckentlasten" der vorbestimmten Dosiermenge im Dosierraum und einem "ein- oder mehrfachen Dekomprimieren" der vorbestimmten Dosiermenge im Dosierraum werden z.B. ein- oder mehrstufige bzw. die parallel ablaufenden axialen Bewegungen und Drehbewegung nicht nur über Stufen, sondern auch über frei wählbare Kurvenverläufe verstanden, die als Sollwert geregelt werden können.

Die Sollwertverläufe können dabei bestimmt werden aus:

- mathematischen Funktionen
- Filterung von Stufenformen oder sonstiges Signalverläufen,
- Beschränkungen der maximalen Änderungsrate des Signales, der ersten, der zweiten und der dritten Ableitung.

Unter einer Zielentfernung der Förderschnecke 20 von der Materialaustragsdüse 15 wird ein bestimmter geometrischer Abstand verstanden, der als Zielvorgabe errechnet und auf den hin geregelt wird. Grundsätzlich lässt sich solch eine Zielvorgabe z.B. aber auch dadurch erreichen, dass Positionen relativ zur den zuvor angefahrenen Positionen z.B. am Ende des synchronisierten Beendens des Dosierens bestimmt werden. Die Größen Zielstaudruck, Zielwinkel, Zieldrehwinkel als auch Zielentfernung können daher alternativ auch relativ zu zuvor erfassten Istwerten von Druck, Winkel und Entfernung bestimmt werden.

Das Verfahren kann in einer Spritzgießeinheit 1 einer Spritzgießmaschine eingesetzt werden mit einem temperierbaren Plastifizierzylinder 10 mit einer axialen Achse, der eine Materialaufnahme und eine davon beabstandete Materialaustragsdüse 15 aufweist und in dem eine entlang der axialen Achse bewegbare und um diese drehbare Förderschnecke 20 mit einer Rückstromsperre angeordnet ist. Sie umfasst ferner einen Antrieb 40 zum Drehen und einen Antrieb 30 zum axialen Bewegen der Förderschnecke 20, eine Steuereinheit 100 der Spritzgießeinheit 1 und Mittel zum Erfassen und Speichern von ersten und weiteren Prozessparametern in der Steuereinheit 100.

Durch die Synchronisierung der Antriebe 30, 40 bzw. der Drehzahl und der axialen Geschwindigkeit der Förderschnecke 20 während des Stoppens des Dosierens wird eine Abhängigkeit des aufdosierten Volumens (Schussgewichts) von der Drehzahl der Förderschnecke 20 stark reduziert. Weiterhin werden dynamische und/oder geometrische Abhängigkeiten eliminiert, aufgrund derer es während des Dosierens möglich wird, in Echtzeit eine Staudruckfehlerkorrektur durchzuführen und den tatsächlichen Staudruck zu ermitteln. Auch wird dadurch eine deutliche Reduzierung eines Unterschieds des aufdosierten Volumens zwischen zwei verschieden parametrierten Spritzgießeinheiten 1 ermöglicht.

Bevorzugt lässt sich das von dynamischen Überlagerungen der weiteren Prozessparameter unabhängige Aufdosieren der vorbestimmten Dosiermenge während des Stoppens des Dosiervorgangs entweder besonders gut dadurch erreichen, dass die Sollkurven der Antriebe 30, 40 in Ihrer Form frei wählbar sind, oder auch dadurch, dass sowohl die Sollkurve des Antriebs 30 zum axialen Bewegen der Förderschnecke 20 als auch die Sollkurve des Antriebs 40 zum Drehen der Förderschnecke 20 variabel angepasst wird.

Im Stand der Technik unterliegen während des Dosiervorganges die gemessenen Istwerte wie beispielsweise Drehmoment oder Staudruck einer dynamischen Überlagerung, beeinflusst unter anderem durch Materialkennwerte (wie z.B. Staubanteil, Granulatform, Materialviskosität, Materialtype oder Materialklasse). Daher entsprechen dort die an der Sensorik gemessenen Werte nicht den real in der plastifizierten Masse vorliegenden Daten und sind auch noch abhängig von Materialkennwerten, die Schwankungen unterliegen können. Daher sollte vor Ablauf einer wie auch immer gearteten Dekompression oder Druckentlastung ein definierter Betriebspunkt am Ende des Dosiervorganges erzielt werden, um von dynamischen Überlagerungen der weiteren Prozessparameter unabhängige Messwerte zu bekommen.

Ausgehend von diesem Punkt erzeugen die Messwerte eine deutlich bessere Aussagekraft und können für eine anschließende Steuerung und Regelung benützt werden.

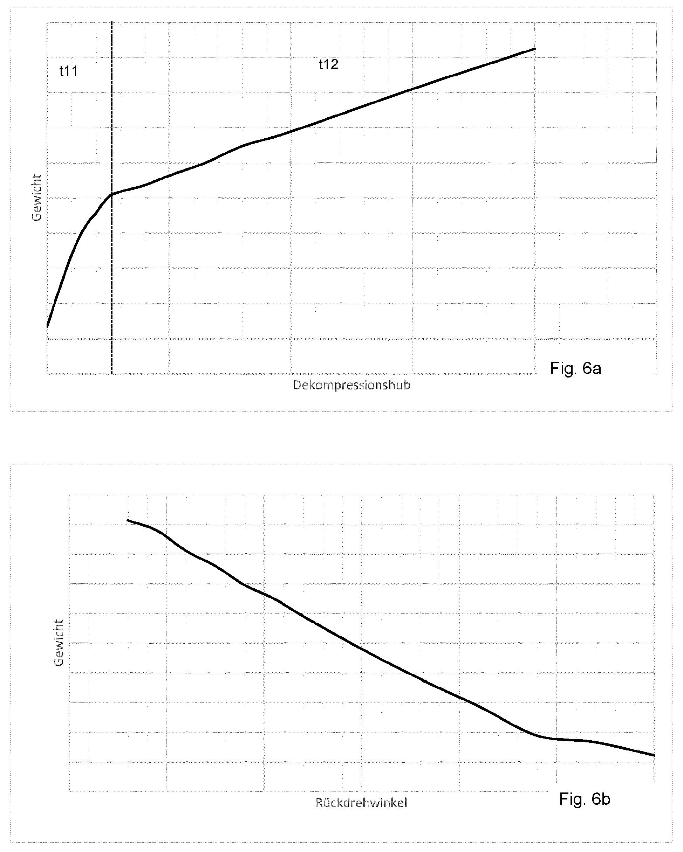

Ein weiterer Punkt ist das Thema einer sequentiellen Druckentlastung durch axiale und rotative Druckentlastung gegenüber einer parallelen Druckentlastung. In den bekannten Verfahren wird entweder rein axial der Druck entlastet oder über Rotation der Druck entlastet bzw. wird die Kombination von beiden bestenfalls als sequentielle Abfolge beschrieben. Dies bewirkt, dass bei rein axialer Dekompression am Ende des Dosierens der eingespannte Druck sich entlastet und somit die Dosiermenge sich passiv (abhängig von zuvor vorhandenen dynamischen Effekten und Materialkennwerten, Verschleiß an Plastifizierbauteilen und vielem mehr) erhöht (Zeitabschnitt t11 in Fig. 6a). Wird zuvor ein von dynamischen Überlagerungen der weiteren Prozessparameter unabhängiger Betriebspunkt angefahren, können zumindest die dynamischen Effekte eliminiert werden.

Um die weiteren Einflussfaktoren zu eliminieren, reicht dies nicht aus. Nachdem der Druck sich entspannt hat, ist immer noch eine Erhöhung des aufdosierten Volumens zu beobachten (Zeitabschnitt t12 in Fig. 6a). Daher wird auch im drucklosen Zustand bei axialer Verschiebung der Förderschnecke 20 über dynamisch-rheologische Effekte das aufdosierte Volumen weiter erhöht.

Wird jetzt allerdings der Druck rotativ entlastet, so ergibt sich mit ansteigendem Drehwinkel eine immer geringeres aufdosiertes Volumen. Auch dieser Effekt ist abhängig von Materialkennwerten (siehe Fig. 6b).

Beide Effekte sind abhängig von Materialkennwerten und anderen äußeren Faktoren, die selbst Schwankungen unterliegen und beeinflussen somit die Konstanz des aufdosierten Volumens negativ.

Daher erfolgt erfindungsgemäß eine Kombination von axialer und rotativer Bewegung mit dem Ziel, das aufdosierte Volumen bei der Dekompression bzw. Druckentlastung weder zu erhöhen noch zu verringern. Dies ist nur durch eine aufeinander abgestimmte parallele Bewegung der Förderschnecke 20 rotativ und axial möglich. Des Weiteren ermöglicht der parallele Betrieb der beiden Bewegungen eine Zeitersparnis.

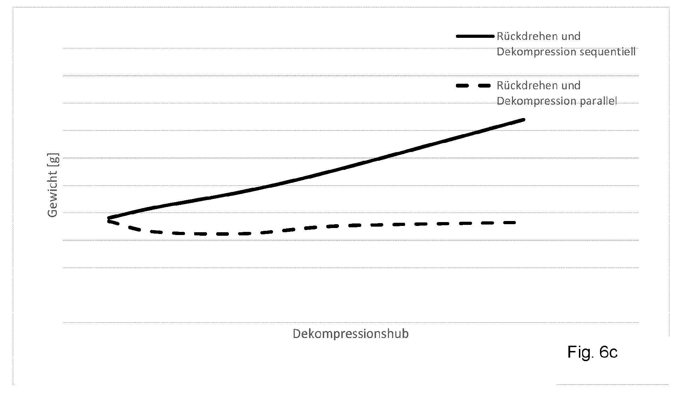

Dies ist zu erkennen in Fig. 6c, in der ein Vergleich eines sequentiellen Ablaufs von Druckentlastung durch Rotation und anschließender axialer Dekompression mit einer Druckentlastung und Dekompression zu sehen ist, bei der die axiale und rotative Bewegung zumindest partiell gleichzeitig durchgeführt wurde. Zwar ist beim sequentiellen Ablauf die Erhöhung des Volumens nicht mehr so drastisch wie in Fig. 6a, allerdings ist die Gewichtserhöhung durch höhere Dekompressionswege immer noch vorhanden. Durch geeignete parallele Abläufe kann dies verhindert werden.

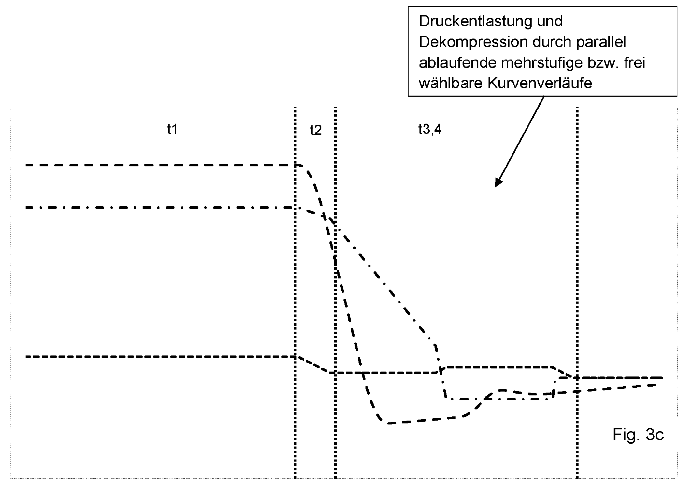

In einer weiteren Variante des Verfahrens können die Abschnitte t3 und t4 in Fig. 3a, 3c ersetzt werden durch mehrere Abschnitte der frei wählbaren Anzahl n bzw. durch frei wählbare Kurvenverläufe der Drehzahl und axialen Geschwindigkeit der Förderschnecke (Fig. 3c). Ebenso ist es möglich, dass ein Parameter eine Kurvenform annimmt und der andere mehrere Stufen und umgekehrt. Dabei kann der Start der Stufen auch abhängig sein zum anderen Signal mit frei wählbaren Kurvenverlauf.

Die Kurvenverläufe können dabei beispielsweise durch mathematische Funktionen, Filterung von vorhanden Stufenverläufen oder Polygonzügen, Beschränkungen der maximalen Änderungsrate des Signales, der ersten, der zweiten und der dritten Ableitung erzeugt werden.

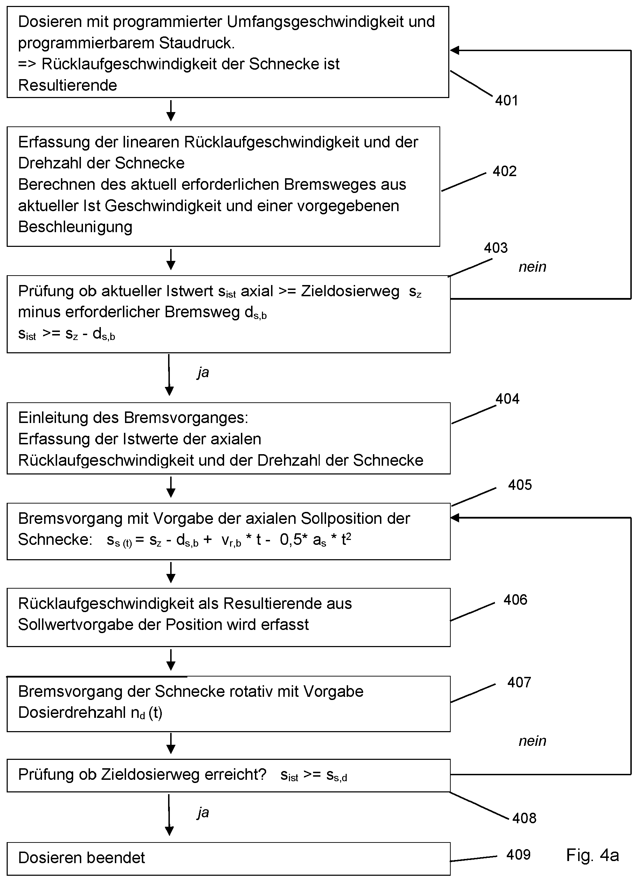

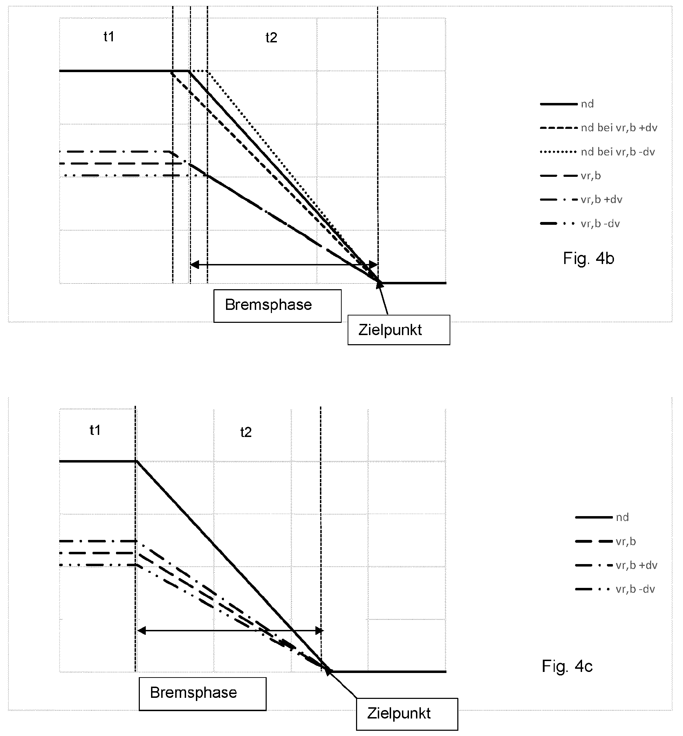

Fig. 4a beschreibt einen Regelablauf der Zeitabschnitte t1 und t2 aus Fig. 3a bzw. Fig. 3b. In Fig. 4a Schritt 401 ist beschrieben, dass während des Dosiervorganges die Drehzahl der Förderschnecke und der aufgeprägte Staudruck geregelt werden. Die sich daraus ergebende Rücklaufgeschwindigkeit ist eine Resultierende abhängig von Materialverhalten, Schneckenverschleiß, Schneckengeometrie und weiteren Parametern (siehe Fig. 4a und Fig. 4b).

Schritt 402 in Fig. 4a beschreibt, dass die Rücklaufgeschwindigkeit der Förderschnecke 20 während des Dosierens kontinuierlich erfasst wird. Ebenso wird während des Dosierens dauernd der aktuell sich ergebende Bremsweg aus der Istgeschwindigkeit und einer vorgegebenen Beschleunigung berechnet. In einer weiteren Variante kann in Schritt 402 auch die sich ergebende Bremszeit berechnet werden aus der vorhandenen Ist-Drehzahl der Förderschnecke 20 und einer vorgegebenen Winkelbeschleunigung. Gleichzeitig wird aus der aktuellen Istgeschwindigkeit eine Abschaltzeit berechnet. Aus dieser Abschaltzeit und der aktuellen Lineargeschwindigkeit kann ebenfalls wieder der sich ergebende Bremsweg berechnet werden.

In Schritt 403 wird geprüft, ob der aktuelle Istwert $s_{ist}$ axial größer gleich dem Zieldosierweg $s_z$ minus des berechneten Bremsweges $d_{s,b}$ ist. Ist diese Bedingung erfüllt, so wird die Bremsphase in Schritt 404 eingeleitet. Ist diese Bedingung nicht erfüllt, springt der Ablauf zurück zu Schritt 401.

In Schritt 404 werden dann zur Einleitung des Bremsvorganges die aktuellen Istwerte der axialen Rücklaufgeschwindigkeit und der Drehzahl der Förderschnecke 20 zu Beginn des Bremszeitpunktes erfasst.

In Schritt 405 wird der Bremsvorgang eingeleitet mit Vorgabe einer Sollposition $s_{s(t)}$ der Förderschnecke 20, berechnet aus Zieldosierweg $s_z$ minus dem berechneten Bremsweg $d_{s,b}$ plus die erfasste Rücklaufgeschwindigkeit $v_{r,b}$ der Förderschnecke multipliziert mit der Zeit t minus die lineare Sollbeschleunigung $a_s$ multipliziert mit der Zeit $t^2$ ab Einleitung des Bremsvorgangs zum Quadrat geteilt durch 2

$$s_{s\,(t)} = s_z - ds_{brems} + v_r * t - 0,5* a_s * t^2$$

In Schritt 406 wird die axiale Rücklaufgeschwindigkeit erfasst, die sich aus der Sollwertvorgabe aus Schritt 405 ergibt.

In Schritt 407 erfolgt die Berechnung der Sollvorgabe der Dosierdrehzahl $n_d$ (t), berechnet aus Istwert der axialen Rücklaufgeschwindigkeit $v_r$ geteilt durch die axiale Rücklaufgeschwindigkeit bei Einleitung des Bremsvorganges $v_{r,B}$ multipliziert mit der Drehzahl der Förderschnecke 20 bei Einleitung des Bremsvorgangs $n_{d,B}$

$$n_d\,(t) = v_{r,} / v_{r,B} * n_{d,B}$$

In einer weiteren Variante des Verfahrens können die Schritte 404 bis 407 auch rekursiv erfolgen, sodass zur Berechnung der Sollposition in jedem Regeltakt neu erfasste Istwerte der axialen Rücklaufgeschwindigkeit und der Drehzahl erfasst werden und der Zeitschritt dann dem Reglertakt entspricht.

In Schritt 408 erfolgt die Überprüfung, ob der aktuelle axiale Istweg $s_{ist}$ der Förderschnecke 20 größer oder gleich dem Zieldosierweg $s_{s,d}$ ist. Ist die Bedingung erfüllt, ist auch der Vorgang Dosieren beendet. (Schritt 409). In der oben beschriebenen rekursiv berechneten Variante der Schritte 404 bis 407 würde hierbei dann wieder zu Schritt 404 zurückgesprungen, wenn die Prüfung ein negatives Ergebnis liefert.

In Fig. 4b ist dargestellt, wie sich dabei unterschiedlich ergebende axiale Rücklaufgeschwindigkeiten auf das Bremsverhalten auswirken. Dargestellt wird dabei das Verhalten, dass sich ergibt, wenn die sich ergebende axiale Rücklaufgeschwindigkeit der Schnecke ($v_{r,b}$) um dv +- variiert ($v_{rb}$+dv; $v_{rb}$-dv). Dazu ergibt sich das zugehörige Verhalten der Drehzahl des Rotationsantriebes, das sich im Standardfall (nd) bzw. in den Fällen mit dv höherer ($n_d$ bei $v_{r,b}$ +dv) oder niedrigerer axialer Rücklaufgeschwindigkeit (($n_d$ bei $v_{r,b}$ -dv) ergibt. Dabei wird abhängig von der axialen Rücklaufgeschwindigkeit das Bremsverhalten der Drehachse so abgeändert, dass beide Achsen gleichzeitig zum Stehen kommen.

In Fig. 4c ist eine weitere Variante dargestellt, wobei hier das Bremsverhalten der axialen Bewegung so angepasst wird, dass bei unterschiedlichen Rücklaufgeschwindigkeiten sowohl lineare Achse als auch Rotationsachse gleichzeitig zum Stehen kommen. Die in Fig. 4b und Fig. 4c dargestellten linearen Bremsverhalten sind ein Ausführungsbeispiel. Dieses kann ebenso jede erdenkliche nichtlineare Form annehmen.

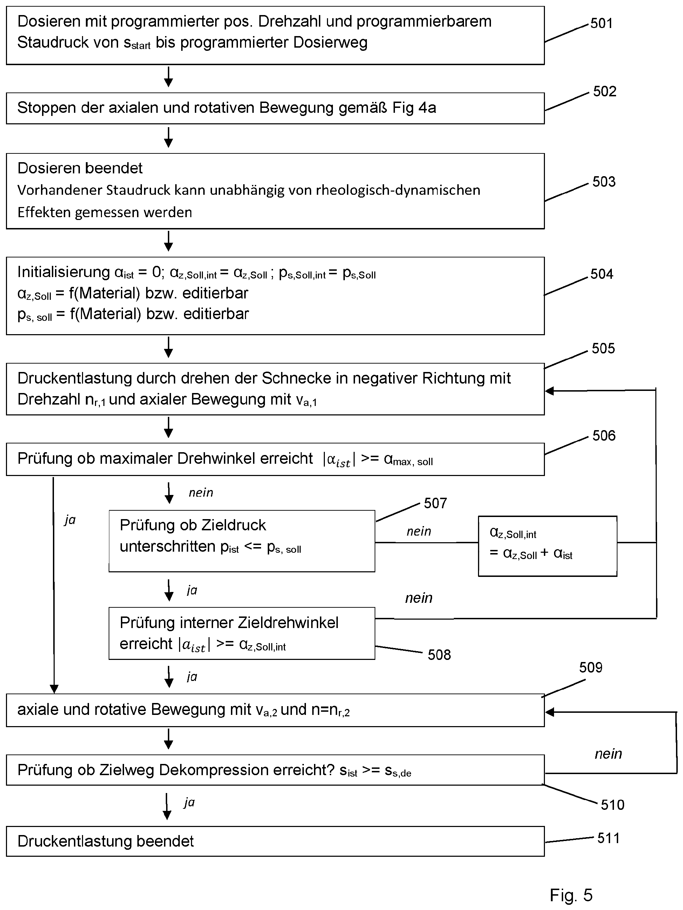

Fig. 5 beschreibt eine Variante des Regelablaufes betreffend des Zeitabschnitts t3 + t4 in den Fig. 3a, 3b und 3c. Schritt 501 der Fig. 5a beschreibt den Dosiergang einer Spritzgussmaschine (Zeitabschnitt t1). Schritt 502 beschreibt den oben in Fig. 4a beschriebenen Bremsvorgang während des Zeitabschnittes t2. Schritt 503 beschreibt den Zeitpunkt, an dem das Dosieren beendet ist.

Durch die zuvor erreichte gezielte Synchronisation sowohl der axialen Bewegung als auch der Drehbewegung der Förderschnecke 20 ist es ab diesem Zeitpunkt möglich, die Drücke des Materials im Schneckenvorraum und/oder andere physikalische Messgrößen unabhängig von rheologisch-dynamischen Effekten zu messen. Dies bildet die Grundlage für eine präzise Druckentlastung und Dekompression

Schritt 504 beschreibt den Initialisierungszeitpunkt der Druckentlastung und Dekompression. Dabei wird die aktuell vorhandene Winkelstellung der Förderschnecke 20 mithilfe des Messmittels 60 gemessen und als Null bzw. Referenzposition gespeichert ($\alpha_{ist}$ = 0). Ebenfalls wird ein interner Sollwert gebildet $\alpha_{z,Soll,int}$ · Dieser interne Sollwert wird aus dem editierbaren Zusatzwinkel $\alpha_{z,Soll}$ gebildet. Ebenso wird der interne Sollwert $p_{s,Soll,int}$ eines Drucks aus dem editierbaren Sollwert $p_{s,Soll}$ gebildet.

$$\alpha_{z,Soll,int} = \alpha_{z,Soll}$$

$$p_{s,Soll,int} = p_{s,Soll}$$

In einer weiteren Variante von Fig. 5 können in Schritt 504 die internen Sollwerte $\alpha_{z,Soll}$ und $p_{s,\,soll}$ eine Funktion abhängig von mindestens einem Materialkennwert sein. Materialkennwerte sind beispielhaft eine Granulatform, ein Staub-anteil des plastifizierbaren Materials, eine Materialviskosität, eine Materialtype oder eine Materialklasse.

Beide Werte können auch unabhängig voneinander den Wert 0 annehmen. Ebenso kann auch jeweils nur einer der beiden Werte $\alpha_{z,Soll}$ und $p_{s,\,soll}$ aktiv sein und der andere inaktiv. Daher kann in einer beispielhaften Ausführung der Druck $p_{s,\,soll}$ inaktiv sein und der Winkel $\alpha_{z,Soll}$ aktiv und abhängig von einem Materialkennwert sein.

In Schritt 505 bis Schritt 508 ist der Zeitabschnitt t3 aus Fig. 3a bis 3b beschrieben. Schritt 505 beschreibt dabei die Ausführung des Abschnittes Druckentlastung mit paralleler axialer Bewegung der Förderschnecke 20 mit Axialgeschwindigkeit $v_{a,1}$ und Drehbewegung $n_{r,1}$. Die Werte $v_{a,1}$ und $n_{r,1}$ können dabei sowohl durch konstante Werte, ganze Profile aber auch durch frei wählbare Kurvenformen anhand mathematischer Funktionen gebildet werden. Die Verläufe der beiden Paramater Drehzahl und axialer Geschwindigkeit der Förderschnecke 20 können unabhängig voneinander oder auch voneinander abhängig sein n=f(v) bzw. v=f(n). Beide Werte können auch unabhängig voneinander den Wert 0 annehmen.

In einer weiteren Variante können die Werte $v_{a,1}$ und $n_{r,1}$ berechnet werden aus Messwerten in den Zeitabschnitten t1 und/oder t2. Eine weitere Variante von Schritt 505 bestimmt den Betrag, die Funktion und oder die Abhängigkeit untereinander von $v_{a,1}$ und $n_{r,1}$ aus Konstruktionsdaten bzw. daraus ableitbaren rheologischen, thermischen und/oder fluidmechanischen Berechnungen.

In Schritt 506 wird geprüft, ob der Betrag des aktuellen Istdrehwinkels $\alpha_{ist}$ größer oder gleich einem zuvor vorgegebenen maximalen Drehwinkel $\alpha_{max,\,soll}$ ist. $\alpha_{max,\,soll}$ kann sowohl editierbar sein, durch statistische Auswertung berechnet als auch eine Abhängigkeit eines Materialkennwertes.

$$|a_{ist}| >= \alpha_{max,\,soll}$$

Ist die Bedingung in Schritt 506 erfüllt, wird weiter nach Schritt 509 verfahren. Ist sie nicht erfüllt, wird in Schritt 507 abgeprüft, ob der aktuell gemessene Istdruck $p_{ist}$ kleiner gleich dem vorgegebenen Zieldruck $p_{s,\,soll}$ aus Schritt 504 ist. Ist diese Bedingung nicht erfüllt, wird der interner Zieldrehwinkel $\alpha_{z,Soll,int}$ neu gebildet aus der Addition des Sollwertes $\alpha_{z,Soll}$ und dem aktuell gemessenen Drehwinkel $\alpha_{ist}$. Anschließend springt der Ablauf wieder zurück zu Schritt 505.

Ist die Bedingung erfüllt, geht es weiter zu Schritt 508. In Schritt 508 wird abgeprüft, ob der Betrag des aktuellen Istdrehwinkels $\alpha_{ist}$ größer oder gleich dem internen Zieldrehwinkel $\alpha_{z,Soll,int}$ ist. Ist die Bedingung nicht erfüllt, geht es wieder zurück zu Schritt 505. Ist die Bedingung erfüllt, geht es weiter mit Schritt 509.

Schritt 509 und 510 beschreiben den Zeitabschnitt t4 in Fig. 3a bzw.3b. Schritt 509 beschreibt die Ausführung des Abschnittes Druckentlastung mit paralleler axialer Bewegung der Förderschnecke 20 mit $v_{a,2}$ und Drehbewegung $n_{r,2}$. Die Werte $v_{a,2}$ und $n_{r,2}$ können sowohl durch konstante Werte, ganze Profile aber auch durch frei wählbare Kurvenformen anhand mathematischer Funktionen gebildet werden. Die Verläufe der beiden Paramater Drehzahl und axiale Geschwindigkeit der Förderschnecke können unabhängig voneinander oder auch voneinander abhängig sein n=f(v) bzw. v=f(n). Beide Werte können auch unabhängig voneinander den Wert 0 annehmen. In einer weiteren Variante können die Werte $v_{a,2}$ und $n_{r,2}$ berechnet werden aus Messwerten in den Zeitabschnitten t1,t2 und/oder t3.

Eine weitere Variante von Schritt 509 bestimmt den Betrag, die Funktion und oder die Abhängigkeit untereinander von $v_{a,2}$ und $n_{r,2}$ aus Konstruktionsdaten bzw. daraus ableitbaren rheologischen, thermischen und/oder fluidmechanischen Berechnungen.

Schritt 510 beschreibt die Prüfung, ob der aktuelle axiale Istweg der Förderschnecke größer oder gleich dem Zielweg Dekompression $s_{s,de}$ ist. Der Zielweg Dekompression $s_{s,de}$ kann editierbar sein, abhängig von konstruktiven Merkmalen der Förderschnecke 20 und anderer Plastifizierkomponenten oder abhängig von anderer Prozessparametern berechnet werden.

Ist diese Bedingung erfüllt, ist der Ablauf der Druckentlastung (t3 + t4 in Fig. 3a+3b) mit Schritt 511 beendet. Ist die Bedingung nicht erfüllt, geht es wieder zurück zu Schritt 509.

Fig. 6a zeigt das resultierend aufdosierte Volumen, welches nach der Dekompression im Schneckenvorraum vorhanden ist, bei rein axialer Dekompression. Das Volumen steigt mit größer werdendem Hub, wobei zwei Abschnitte zu erkennen sind. Diese Abschnitte sind je nach Materialkennwerten und vorhergehenden Prozessparametern und dynamischen Einflüssen unterschiedlich ausgeprägt. Im Abschnitt t11 steigt das Volumen im Verhältnis zum Hub stark an, da sich hier der in den Schneckengängen vorhandene Druck entlastet. Anschließend in Abschnitt t12 steigt das Volumen weiter an aufgrund von dynamisch-rheologischen Effekten.

Fig. 6b zeigt das aufdosierte Volumen aufgetragen über einem Rückdrehwinkel bei Druckentlastung durch reines Rückdrehen. Auch hier ist die Ausprägung des Verlaufes abhängig von Materialkennwerten, allerdings immer mit dem Trend kleinerer Volumina bei steigendem Rückdrehwinkel.

Fig. 6c zeigt den Vergleich einer sequentiellen Kombination von Rückdrehen und axialer Dekompression und einem Ablauf bei dem Rückdrehen und axiale Bewegung auf geeignete Weise parallel zueinander ausgeführt werden. Dabei ist zu sehen, dass die Zunahme des Dosiervolumens bei sequentieller Kombination nicht mehr so ausgeprägt wie bei Fig. 6a allerdings immer noch deutlich vorhanden. Demgegenüber kann mit einem geeigneten parallelen Ablauf das aufdosierte Volumen auf einem etwa gleichbleibenden Niveau gehalten werden.

Bei anderen bevorzugten Ausführungsformen des Verfahrens, die es ermöglichen, die Genauigkeit des Dosierens noch weiter zu erhöhen, ist der Betrag der zweiten Solldrehzahl niedriger ist als der Betrag der ersten Solldrehzahl (Fig. 3a, 3b). Alternativ wird eine axiale Geschwindigkeit der Förderschnecke 20 während der Drehung mit der ersten Solldrehzahl auf null (Fig. 3b) oder einen vorbestimmten positiven Wert (Fig. 3a) eingestellt.

Eine Spritzgießeinheit 1 einer Maschine zur Verarbeitung von Kunststoffen und anderer plastifizierbarer Materialien kann so konfiguriert werden, dass sie das Verfahren ausführen kann. Sie weist einen temperierbaren Plastifizierzylinder 10 mit einer axialen Achse auf, der an einem Ende eine Materialaufnahme, eingerichtet zum Zuführen plastifizierbaren Materials, und an einem dazu gegenüberliegenden Ende eine Materialaustragsdüse 15 aufweist. Im Plastifizierzylinder 10 ist eine entlang der axialen Achse bewegbare und um diese drehbare Förderschnecke 20 mit einer Rückstromsperre angeordnet. Ein Antrieb ist zum Drehen der Förderschnecke 20 im Plastifizierzylinder 10 vorgesehen und dazu konfiguriert, Material durch Drehen der Förderschnecke 20 und der dadurch entstehenden Friktionswärme und/oder durch Temperierung des Plastifizierzylinders 10 zu plastifizieren und plastifiziertes Material in einen Dosierraum des Plastifizierzylinders 10 vor ein freies Ende der Förderschnecke 20 durch Drehen der Förderschnecke 20 in einer ersten Richtung zu fördern, wobei sich ein Staudruck in dem Dosierraum bildet, wodurch die Förderschnecke 20 axial von der Materialaustragsdüse 15 wegbewegt und ein Dosiervorgang eingeleitet wird. Ein Antrieb 30 ist zum axialen Bewegen der Förderschnecke 20 vorgesehen. Die Spritzgießeinheit hat ferner eine Steuereinheit 100 und Mittel zum Erfassen und Speichern von ersten und weiteren Prozessparametern in der Steuereinheit 100.

Mittel zum Erfassen und Speichern von weiteren Prozessparametern und/oder Mittel zum Bereitstellen von weiteren Prozessparametern in der Steuereinheit 100 sind vorgesehen, wobei die weiteren Prozessparameter zumindest auch vom zu plastifizierenden Material abhängig sind. Eine Auswerteeinheit ist vorgesehen und dazu konfiguriert ist, die ersten und weiteren Prozessparameter zur Bestimmung des Erreichens einer vorbestimmten Dosiermenge in dem Dosierraum auszuwerten und bei Erreichen der vorbestimmten Dosiermenge ein Signal an die Steuereinheit 100 auszugeben. Die Steuereinheit 100 ist über Steuermittel zur Ansteuerung der Antriebe 30, 40 dazu eingerichtet ist, den Dosiervorgang durch synchronisiertes Beenden der Drehung der Förderschnecke 20 und axialen Bewegung der Förderschnecke 20 zu stoppen.

Druckentlastungsmittel sind vorgesehen, die konfiguriert sind zum ein- oder mehrfachen Druckentlasten der vorbestimmten Dosiermenge im Dosierraum durch axiale Bewegung der Förderschnecke 20 und/oder Drehen der Förderschnecke 20 mit einer ersten Solldrehzahl in einer der ersten Richtung entgegengesetzten zweiten Richtung bis zu einem Zieldrehwinkel der Förderschnecke 20 und/oder einem Zielstaudruck im Dosierraum.

Dekomprimiermittel sind vorgesehen, die konfiguriert sind zum ein- oder mehrfachen Dekomprimieren der vorbestimmten Dosiermenge im Dosierraum durch vorzugsweise gleichzeitige axiale Bewegung der Förderschnecke 20 und Drehen der Förderschnecke 20 mit einer zweiten Solldrehzahl in die zweite Richtung bis zu einer vorbestimmten oder vorbestimmbaren Position in einer Zielentfernung der Förderschnecke 20 von der Materialaustragsdüse 15 und/oder in einer Zielentfernung von einer zuvor erfassten Position der Förderschnecke 20. Dabei werden jeweils ein Antrieb 40 zum Drehen und ein Antrieb 30 zum axialen Bewegen der Förderschnecke 20 unter Berücksichtigung von jeweils mindestens einem Istwert der ersten und der weiteren Prozessparameter so miteinander synchronisiert, dass ein von dynamischen Überlagerungen der weiteren Prozessparameter unabhängiges Aufdosieren der vorbestimmten Dosiermenge und ein Stoppen beider Antriebe 30, 40 am Ende des Dosiervorgangs erfolgen, wobei das Stoppen der beiden Antriebe 30, 40 abhängig von der Rücklaufgeschwindigkeit des Materials eingeleitet und entweder in Echtzeit oder bei Beginn des Stoppvorgangs mit in Abhängigkeit von den Istwerten ermittelten Sollkurven der Antriebe 30, 40 synchronisiert wird und wobei mindestens die Sollkurve einer der beiden Antriebe 30, 40 variabel angepasst wird.

Ein Computerprogrammprodukt mit einem Programmcode, der auf einem Computer lesbaren Medium gespeichert ist, kann zur Durchführung des Verfahrens verwendet werden, indem es vorzugsweise Steuerbefehle für die Steuereinheit und/oder die Teile der Maschine aufgrund des Programmcodes erzeugt.

## Bezugszeichenliste

1 Spritzgießeinheit
5 Spritzgießform
10 Plastifizierzylinder
15 Materialaustragsdüse
20 Förderschnecke
30 Antrieb zum axialen Bewegen der Förderschnecke
40 Antrieb zum Drehen der Förderschnecke
50 Absolutweg-Messwandler der Förderschnecke
60 Drehzahl-/Drehwinkel-Messwandler der Förderschnecke
70 Staudruck-Messwandler
80 Messwandler der Rücklaufgeschwindigkeit des Materials
90 Messwandler für zusätzliche erste und weitere Prozessparameter
100 Steuereinheit
110 Einstellmittel für Kraft, Geschwindigkeit, Drehzahl, Druck, etc.
120 Speichermittel zum Speichern eingestellter Werte
130 Mittel zur Berechnung eines Sollwertverlaufs
140 Vergleichsmittel zum Vergleichen von Ist- und Soll-Werten
150 Motorsteller für den Antrieb zum axialen Bewegen der Förderschnecke
160 Motorsteller für den Antrieb zum Drehen der Förderschnecke

## Patentansprüche

1. Verfahren zur antriebssynchronisierten Dosierregelung einer Spritzgießeinheit (1) einer Maschine zur Verarbeitung von Kunststoffen und anderer plastifizierbarer Materialien mit einem temperierbaren Plastifizierzylinder (10) mit einer axialen Achse, der an eine Materialaufnahme und an einem davon beabstandeten Bereich eine Materialaustragsdüse (15) aufweist und in dem eine entlang der axialen Achse bewegbare und um diese drehbare Förderschnecke (20) mit einer Rückstromsperre angeordnet ist, umfassend die Schritte

    - Zuführen plastifizierbaren Materials in die Materialaufnahme des Plastifizierzylinders (10),
    - Plastifizieren des Materials durch Drehen der Förderschnecke (20) und der dadurch entstehenden Friktionswärme und/oder durch Temperierung des Plastifizierzylinders (10),
    - Fördern des plastifizierten Materials in einen Dosierraum des Plastifizierzylinders (10) vor ein freies Ende der Förderschnecke (20) durch Drehen der Förderschnecke (20) in einer ersten Richtung, wobei sich ein Staudruck in dem Dosierraum bildet, wodurch die Förderschnecke (20) axial von der Materialaustragsdüse (15) wegbewegt und ein Dosiervorgang eingeleitet wird,
    - Erfassen und Speichern von ersten Prozessparametern in einer Steuereinheit (100) der Spritzgießeinheit (1), insbesondere eines Förderschnecken-Absolutwegs, einer Drehzahl der Förderschnecke (20), eines Drehwinkels der Förderschnecke (20), eines Plastifizierzylinderwegs, des Staudrucks, einer Rücklaufgeschwindigkeit des Materials infolge des Staudrucks oder einer Temperatur des Plastifizierzylinders (10),
    **dadurch gekennzeichnet, dass** das Verfahren außerdem umfasst
    - Erfassen und Speichern und/oder Bereitstellen von weiteren Prozessparametern in der Steuereinheit (100), die vom zu plastifizierenden Material abhängig sind,
    - Auswerten der ersten und weiteren Prozessparameter zur Bestimmung des Erreichens einer vorbestimmten Dosiermenge in dem Dosierraum und infolge dessen Stoppen des Dosiervorgangs durch synchronisiertes Beenden der Drehung der Förderschnecke (20) und axialen Bewegung der Förderschnecke (20),
- ein- oder mehrfaches Druckentlasten der vorbestimmten Dosiermenge im Dosierraum durch axiale Bewegung der Förderschnecke (20) und/oder Drehen der Förderschnecke (20) mit einer ersten Solldrehzahl in eine der ersten Richtung entgegengesetzten zweiten Richtung bis zu einem Zieldrehwinkel der Förderschnecke (20) und/oder einem Zielstaudruck im Dosierraum, und
- ein- oder mehrfaches Dekomprimieren der vorbestimmten Dosiermenge im Dosierraum durch gleichzeitige axiale Bewegung der Förderschnecke (20) und Drehen der Förderschnecke (20) mit einer zweiten Solldrehzahl in die zweite Richtung bis zu einer vorbestimmten oder vorbestimmbaren Position in einer Zielentfernung der Förderschnecke (20) von der Materialaustragsdüse (15) und/oder in einer Zielentfernung von einer zuvor erfassten Position der Förderschnecke (20),
- wobei jeweils ein Antrieb (40) zum Drehen und ein Antrieb (30) zum axialen Bewegen der Förderschnecke (20) unter Berücksichtigung von jeweils mindestens einem Istwert der ersten und der weiteren Prozessparameter so miteinander synchronisiert werden, dass ein dynamisch unverfälschtes Aufdosieren der vorbestimmten Dosiermenge und ein gleichzeitiges Stoppen beider Antriebe (30, 40) am Ende des Dosiervorgangs erfolgen, wobei das Stoppen der beiden Antriebe (30, 40) abhängig von der Rücklaufgeschwindigkeit des Materials eingeleitet und entweder in Echtzeit oder bei Beginn des Stoppvorgangs mit in Abhängigkeit von den Istwerten ermittelten Sollkurven der Antriebe (30, 40) synchronisiert wird und wobei mindestens die Sollkurve einer der beiden Antriebe (30, 40) variabel angepasst wird.

2. Verfahren nach Anspruch 1, **dadurch gekennzeichnet, dass** die Sollkurven der Antriebe (30, 40) in Ihrer Form frei wählbar sind.

3. Verfahren nach Anspruch 1, **dadurch gekennzeichnet, dass** sowohl die Sollkurve des Antriebs (30) zum axialen Bewegen der Förderschnecke (20) als auch die Sollkurve des Antriebs (40) zum Drehen der Förderschnecke (20) variabel angepasst werden.

4. Verfahren nach einem der vorhergehenden Ansprüche, **dadurch gekennzeichnet, dass** das Druckentlasten der vorbestimmten Dosiermenge im Dosierraum durch gleichzeitige axiale Bewegung der Förderschnecke (20) und Drehen der Förderschnecke (20) mit der ersten Solldrehzahl erfolgt.

5. Verfahren nach einem der vorhergehenden Ansprüche, **dadurch gekennzeichnet, dass** die Sollwertverläufen der ersten und weiteren Prozessparameter bestimmt werden aus:

    - mathematischen Funktionen,
    - Filterung von Stufenformen oder sonstiges Signalverläufen,
    - Beschränkungen der maximalen Änderungsrate des Signales, der ersten, der zweiten und der dritten Ableitung.

6. Verfahren nach einem der vorhergehenden Ansprüche, **dadurch gekennzeichnet, dass** der Antrieb (40) zum Drehen und der Antrieb (30) zum axialen Bewegen der Förderschnecke (20) so miteinander synchronisiert werden, dass synchronisiert ablaufende Bewegungen der Förderschnecke (20) gekoppelt, voneinander abhängig und/oder aufeinander synchronisiert sind.

7. Verfahren nach einem der vorhergehenden Ansprüche, **dadurch gekennzeichnet, dass** der Betrag der zweiten Solldrehzahl niedriger ist als der Betrag der ersten Solldrehzahl.

8. Verfahren nach einem der vorhergehenden Ansprüche, **dadurch gekennzeichnet, dass** eine axiale Geschwindigkeit der Förderschnecke (20) während der Drehung mit der ersten Solldrehzahl auf null oder einen vorbestimmten positiven Wert eingestellt wird.

9. Verfahren nach einem der vorhergehenden Ansprüche, **dadurch gekennzeichnet, dass** die weiteren Prozessparameter wenigstens einen Materialkennwert wie einen Materialtyp, eine Materialklasse, eine Granulatform, einen Staubanteil des plastifizierbaren Materials oder eine Materialviskosität umfassen.

10. Verfahren nach einem der vorhergehenden Ansprüche, **dadurch gekennzeichnet, dass** die weiteren Prozessparameter wenigstens einen der folgenden Prozessparameter umfassen: eine Förderschneckengeometrie, einen Förderschneckenverschleiß, eine Rückstromsperrengeometrie.

11. Spritzgießeinheit (1) einer Maschine zur Verarbeitung von Kunststoffen und anderer plastifizierbarer Materialien mit

    - einem temperierbaren Plastifizierzylinder (10) mit einer axialen Achse, der an einem Ende eine Materialaufnahme, eingerichtet zum Zuführen plastifizierbaren Materials, und an einem dazu gegenüberliegenden Ende eines Materialaustragsdüse (15) aufweist,
    - einer im Plastifizierzylinder (10) angeordneten und entlang der axialen Achse bewegbaren und um diese drehbaren Förderschnecke (20) mit einer Rückstromsperre,

- einem Antrieb (40) zum Drehen der Förderschnecke (20) im Plastifizierzylinder (10), der dazu konfiguriert sind, Material durch Drehen der Förderschnecke (20) und der dadurch entstehenden Friktionswärme und/oder durch Temperierung des Plastifizierzylinders (10) zu plastifizieren und plastifiziertes Material in einen Dosierraum des Plastifizierzylinders (10) vor ein freies Ende der Förderschnecke (20) durch Drehen der Förderschnecke (20) in einer ersten Richtung zu fördern, wobei sich ein Staudruck in dem Dosierraum bildet, wodurch die Förderschnecke (20) axial von der Materialaustragsdüse (15) wegbewegt und ein Dosiervorgang eingeleitet wird,

- einem Antrieb (30) zum axialen Bewegen der Förderschnecke (20),

- einer Steuereinheit (100) der Spritzgießeinheit (1) und

- Mitteln zum Erfassen und Speichern von ersten und weiteren Prozessparametern in der Steuereinheit (100),

**dadurch gekennzeichnet,**

**dass** die Spritzgießeinheit (1) konfiguriert ist, das Verfahren nach einem der Ansprüche 1 bis 10 auszuführen,

12. Computerprogrammprodukt mit einem Programmcode, der auf einem Computer lesbaren Medium gespeichert ist, zur Durchführung des Verfahrens nach einem der Ansprüche 1 bis 10 von der Spritzgießeinheit nach Anspruch 11.

**Claims**

1. A method for drive-synchronized dosing control of an injection molding unit (1) of a machine for processing plastics and other plasticizable materials, comprising a temperature-controllable plasticizing cylinder (10) which has an axial axis and which has a material intake and, in a region at a spacing therefrom, a material discharge nozzle (15), and arranged in which is a conveying screw (20) that is movable along and rotatable about the axial axis and comprises a backflow blocking device, wherein the method comprises the following steps:

- supplying plasticizable material to the material intake of the plasticizing cylinder (10),
- plasticizing the material as a result of rotating the conveying screw (20) and the resulting frictional heat and/or temperature control of the plasticizing cylinder (10),
- conveying the plasticized material into a dosing chamber of the plasticizing cylinder (10) in front of a free end of the conveying screw (20) by rotating the conveying screw (20) in a first direction, wherein a dynamic pressure is formed in the dosing chamber, as a result of which the conveying screw (20) is moved axially away from the material discharge nozzle (15) and a dosing procedure is initiated,

- detecting and storing, in a control unit (100) of the injection molding unit (1), first process parameters, in particular a conveying screw absolute position, a speed of rotation of the conveying screw (20), an angle of rotation of the conveying screw (20), a plasticizing cylinder travel, the dynamic pressure, a speed of return of the material as a result of the dynamic pressure, or a temperature of the plasticizing cylinder (10),

- detecting and storing and/or providing in the control unit (100) further process parameters, which are dependent on the material to be plasticized,

- single or multiple pressure relief of the predetermined dosed quantity in the dosing chamber as a result of axial movement of the conveying screw (20) and/or rotation of the conveying screw (20) at a first setpoint speed of rotation in a second direction, opposed to the first direction, until a target angle of rotation of the conveying screw (20) and/or a target dynamic pressure in the dosing chamber is reached,

**characterized in that** the method moreover comprises:

- evaluating the first and further process parameters for the purpose of determining whether a predetermined dosing quantity has been reached in the dosing chamber, and as a result stopping the dosing procedure by bringing rotation of the conveying screw (20) and axial movement of the conveying screw (20) to an end in synchronized manner,
- and
- single or multiple decompression of the predetermined dosed quantity in the dosing chamber by simultaneous axial movement of the conveying screw (20) and rotation of the conveying screw (20) at a second setpoint speed of rotation in the second direction until a predetermined or predeterminable position at a target distance of the conveying screw (20) from the material discharge nozzle (15) and/or at a target distance from a previously detected position of the conveying screw (20) is reached,
- wherein respectively a drive (40) for rotation and a drive (30) for axial movement of the conveying screw (20) are synchronized to one another, taking into account at least one actual value each of the first and the further process parameters, such that a dosing of the predetermined dosing quantity, independent on dynamic superimpositions of the further process parameters, and simultaneous stopping of both drives (30, 40) at the end of the dosing procedure are performed, wherein stopping of the two drives (30, 40) is initiated depending on the speed of return of the material and is synchronized, either in real time or at the start of the stopping procedure, with setpoint curves of the drives (30, 40) that are determined depending on the actual values, and wherein at least the setpoint curve of one of the two drives (30, 40) is variably adapted.

2. The method as claimed in claim 1, **characterized in that** the shape of the setpoint curves of the drives (30, 40) is freely selectable.

3. The method as claimed in claim 1, **characterized in that** both the setpoint curve of the drive (30) for axially moving the conveying screw (20) and the setpoint curve of the drive (40) for rotating the conveying screw (20) are variably adapted.

4. The method as claimed in one of the preceding claims, **characterized in that** pressure relief of the predetermined dosed quantity in the dosing chamber is performed by simultaneous axial movement of the conveying screw (20) and rotation of the conveying screw (20) at the first setpoint speed of rotation.

5. The method as claimed in one of the preceding claims, **characterized in that** the setpoint courses of the first and further process parameters are determined from:

   - mathematical functions,
   - filtering of step shapes or other signal courses,
   - limiting of the maximum rate of change of the signal, the first, second and third derivatives.

6. The method as claimed in one of the preceding claims, **characterized in that** the drive (40) for rotation and the drive (30) for axial movement of the conveying screw (20) are synchronized to one another such that movements of the conveying screw (20) that are executed in synchronized manner are coupled, dependent on one another and/or synchronized to one another.

7. The method as claimed in one of the preceding claims, **characterized in that** the value of the second setpoint speed of rotation is lower than the value of the first setpoint speed of rotation.

8. The method as claimed in one of the preceding claims, **characterized in that**, during rotation at the first setpoint speed of rotation, an axial speed of the conveying screw (20) is set to zero or to a predetermined positive value.

9. The method as claimed in one of the preceding claims, **characterized in that** the further process parameters comprise at least one material characteristic, such as a material type, a material class, a granule shape, a dust content of the plasticizable material, or a material viscosity.

10. The method as claimed in one of the preceding claims, **characterized in that** the further process parameters comprise at least one of the following process parameters: conveyor screw geometry, conveyor screw wear, backflow blocking device geometry.

11. An injection molding unit (1) of a machine for processing plastics and other plasticizable materials, comprising:

    - a temperature-controllable plasticizing cylinder (10) comprising an axial axis and, at one end, a material intake configured for supplying plasticizable material, and at an end opposed thereto a material discharge nozzle (15),
    - arranged in the plasticizing cylinder (10), a conveying screw (20) that is movable along and rotatable about the axial axis and has a backflow blocking device,
    - a drive (40) for rotating the conveying screw (20) in the plasticizing cylinder (10) configured to plasticize material by rotating the conveying screw (20) and the resulting frictional heat and/or by temperature control of the plasticizing cylinder (10) and to convey plasticized material into a dosing chamber of the plasticizing cylinder (10) in front of a free end of the conveying screw (20) by rotating the conveying screw (20) in a first direction, wherein a dynamic pressure is formed in the dosing chamber, by which the conveying screw (20) is moved axially away from the material discharge nozzle (15) and a dosing procedure is initiated,
    - a drive (30) for axially moving the conveying screw (20),
    - a control unit (100) of the injection molding unit (1), and
    - devices for detecting and storing first and further process parameters in the control unit (100),
    **characterized in that**
    - the injection molding unit (1) is configured to perform the method as claimed in one of the claims 1 to 10.

**12.** A computer program product having a program code that is stored on a computer-readable medium, for carrying out the method according to one of the claims 1 to 10 by the injection moulding unit according to claim 11.

## Revendications

**1.** Procédé de réglage de dosage synchronisé avec le fonctionnement d'une unité de moulage par injection (1) d'une machine pour la transformation de matières plastiques et d'autres matériaux plastifiables ayant un cylindre de plastification à température variable (10) avec un arbre axial, cylindre qui présente une buse d'application de matériau (15) à une entrée de matériau et dans une zone éloignée d'elle et dans lequel une vis sans fin d'alimentation (20) est disposée mobile avec un blocage de retour de flux le long de l'arbre axial et tournante autour de celui-ci, comprenant les étapes consistant à

- alimenter l'entrée de matériau du cylindre de plastification (10) en matériau plastifiable,
- plastifier le matériau grâce à la rotation de la vis sans fin d'alimentation (20) et à la chaleur de friction qui en découle et/ou à la variation de la température du cylindre de plastification (10),
- introduire le matériau plastifié dans une chambre de dosage du cylindre de plastification (10) devant une extrémité libre de la vis sans fin d'alimentation (20) en faisant tourner la vis sans fin d'alimentation (20) dans un premier sens, une pression dynamique se formant dans la chambre de dosage, ce qui éloigne la vis sans fin d'alimentation (20) axialement de la buse d'application de matériau (15) et démarre un processus de dosage,
- mesurer et enregistrer les premiers paramètres du processus dans une unité de commande (100) de l'unité de moulage par injection (1), en particulier un chemin absolu de vis sans fin d'alimentation, un nombre de tours de la vis sans fin d'alimentation (20), un angle de rotation de vis sans fin d'alimentation (20), une course du cylindre de plastification, la pression dynamique, une vitesse de retour du matériau en raison de la pression dynamique ou d'une température du cylindre de plastification (10),
**caractérisé en ce que** le procédé comprend en outre
- la mesure et l'enregistrement et/ou la mise à disposition dans l'unité de commande (100) d'autres paramètres de processus qui sont dépendants du matériau à plastifier,
- l'exploitation des premiers paramètres de processus et des suivants pour la détermination de l'atteinte d'une quantité de dosage prédéterminée dans la chambre de dosage puis l'arrêt du processus de dosage au moyen de la fin synchronisée de la rotation de vis sans fin d'alimentation (20) et du mouvement axial de la vis sans fin d'alimentation (20),
- une décharge de pression simple ou multiple de la quantité de dosage prédéterminée dans la chambre de dosage grâce au déplacement axial de la vis sans fin d'alimentation (20) et/ou de la rotation de la vis sans fin d'alimentation (20) avec un premier nombre de tours de consigne dans un deuxième sens opposé au premier sens jusqu'à un angle de rotation cible de la vis sans fin d'alimentation (20) et/ou une pression dynamique cible dans la chambre de dosage, et
- une décompression simple ou multiple de la quantité de dosage prédéterminée dans la chambre de dosage grâce à un mouvement axial simultané de la vis sans fin d'alimentation (20) et à la rotation de vis sans fin d'alimentation (20) avec un deuxième nombre de tours de consigne dans le deuxième sens jusqu'à une position prédéterminée ou prédéterminable dans un éloignement de la cible de la vis sans fin d'alimentation (20) par rapport à la buse d'application de matériau (15) et/ou dans un éloignement de la cible par rapport à une position mesurée précédemment de la vis sans fin d'alimentation (20),
- dans lequel un mécanisme (40) pour la rotation et un mécanisme (30) pour le déplacement axial de la vis sans fin d'alimentation (20) en prenant en compte à chaque fois au moins une valeur réelle des premiers paramètres de processus et des suivants sont synchronisés les uns avec les autres de telle sorte qu'un dosage dynamique non erroné de la quantité de dosage prédéterminée et un arrêt simultané des deux mécanismes (30, 40) à la fin du processus de dosage se produise, l'arrêt des deux mécanismes (30, 40) étant démarré indépendamment de la vitesse de retour du matériau et étant synchronisé soit en temps réel soit lors du démarrage du processus d'arrêt en dépendance avec des courbes de consigne obtenues à partir des valeurs réelles des mécanismes (30, 40) et dans lequel la courbe de consigne de l'un des deux mécanismes (30, 40) au moins étant adaptée de manière variable.

**2.** Procédé selon la revendication 1, **caractérisé en ce que** les courbes de consigne des mécanismes (30, 40) peuvent être choisies librement quant à leur forme.

**3.** Procédé selon la revendication 1, **caractérisé en ce que** tant la courbe de consigne du mécanisme (30) pour le déplacement axial de la vis sans fin d'alimentation (20) que la courbe de consigne du mécanisme (40) pour la rotation de la vis sans fin d'alimentation (20) peut être adaptés de manière variable.

4. Procédé selon l'une des revendications précédentes, caractérisé en que la décharge de pression de la quantité de dosage prédéterminée dans la chambre de dosage se produit avec le premier nombre de tours de consigne grâce au déplacement axial de la vis sans fin d'alimentation (20) et à la rotation de la vis sans fin d'alimentation (20) simultanés.

5. Procédé selon l'une des revendications précédentes, **caractérisé en ce que** les évolutions des valeurs de consigne des premiers paramètres de processus et des suivants sont déterminées à partir :

    - de fonctions mathématiques,
    - d'un filtrage des formes des étapes ou de l'évolution d'un autre signal,
    - de limitations des taux de variation maximaux du signal, de la première, de la deuxième ou de la troisième dérivation.

6. Procédé selon l'une des revendications précédentes, **caractérisé en ce que** le mécanisme (40) de rotation et le mécanisme (30) de déplacement axial de la vis sans fin d'alimentation (20) sont synchronisés l'un avec l'autre de telle manière que des déplacements de la vis sans fin d'alimentation (20) se produisant de manière synchronisée soient couplés, dépendants les uns des autres et/ou synchronisés les uns avec les autres.

7. Procédé selon l'une des revendications précédentes, **caractérisé en ce que** la valeur du deuxième nombre de tours de consigne est inférieure à la valeur du premier nombre de tours de consigne.

8. Procédé selon l'une des revendications précédentes, **caractérisé en ce qu'**une vitesse axiale de la vis sans fin d'alimentation (20) est réglée pendant la rotation avec le premier nombre de tours de consigne à zéro ou à une valeur positive prédéterminée.

9. Procédé selon l'une des revendications précédents, **caractérisé en ce que** les autres paramètres de processus comprennent au moins une caractéristique du matériau telle que le type de matériau, une classe de matériau, une forme de granulés, une teneur en poussière du matériau plastifiable ou une viscosité du matériau.

10. Procédé selon l'une des revendications précédentes, **caractérisé en ce que** les autres paramètres de processus comprennent au moins l'un des paramètres de processus suivants : une géométrie de la vis sans fin d'alimentation, une usure de la vis sans fin d'alimentation, une géométrie de blocage, une géométrie du blocage de flux de retour.

11. Unité de moulage par injection (1) d'une machine pour la transformation de matières plastiques et d'autres matériaux plastifiables, comprenant :

    - un cylindre de plastification à température variable (10) avec un arbre axial qui présente à une extrémité une entrée de matériau, prévu pour l'alimentation en matériau plasfitiable et, à une extrémité opposée, une buse d'application de matériau (15),
    - une vis sans fin d'alimentation (20) avec un blocage de flux de retour, disposée dans le cylindre de plastification (10), mobile le long de l'arbre axial et tournante autour de celui-ci,
    - un mécanisme (40) pour la rotation la vis sans fin d'alimentation (20) dans le cylindre de plastification (10) qui est configuré pour plastifier le matériau grâce à la rotation de la vis sans fin d'alimentation (20) et à la chaleur de friction produite et/ou au chauffage du cylindre de plastification (10) et pour alimenter la chambre de dosage du cylindre de plastification (10) en matériau plastifié devant une extrémité libre de la vis sans fin d'alimentation (20) grâce à la rotation de la vis sans fin d'alimentation (20) dans un premier sens, une pression dynamique se formant dans la chambre de dosage, éloignant axialement la vis sans fin d'alimentation (20) de la buse d'application de matériau (15) et lançant un processus de dosage,
    - un mécanisme (30) pour le déplacement axial de la vis sans fin d'alimentation (20),
    - une unité de commande (100) de l'unité de moulage par injection (1) et
    - des moyens pour mesurer et enregistrer les premiers paramètres de processus et les suivants dans l'unité de commande (100),

    **caractérisé en ce que**
    l'unité de moulage par injection (1) est configurée pour mettre en œuvre la procédé selon l'une des revendications 1 à 10.

12. Programme d'ordinateur en tant que produit comportant un code de programme, qui est stocké sur un support de façon lisible, pour la mise en œuvre du procédé selon l'une des revendications 1 à 10 par l'unité de moulage par injection selon la revendication 11.

Fig. 1

Fig. 2

Dosieren beendet

2 stufige axiale und rotative
Druckentlastung und
Dekompression beendet

$p_{s, soll}$

$v_{a,1}$

$v_{a,2}$

$n_{r,1}$

$n_{r,2}$

Fig. 3a

Fig. 3b

Druckentlastung und Dekompression durch parallel ablaufende mehrstufige bzw. frei wählbare Kurvenverläufe

t1

t2

t3,4

Fig. 3c

Dosieren mit programmierter Umfangsgeschwindigkeit und programmierbarem Staudruck.
=> Rücklaufgeschwindigkeit der Schnecke ist Resultierende

401

Erfassung der linearen Rücklaufgeschwindigkeit und der Drehzahl der Schnecke
Berechnen des aktuell erforderlichen Bremsweges aus aktueller Ist Geschwindigkeit und einer vorgegebenen Beschleunigung

402

403

*nein*

Prüfung ob aktueller Istwert $s_{ist}$ axial >= Zieldosierweg $s_z$ minus erforderlicher Bremsweg $d_{s,b}$
$s_{ist}$ >= $s_z$ - $d_{s,b}$

*ja*

404

Einleitung des Bremsvorganges:
Erfassung der Istwerte der axialen Rücklaufgeschwindigkeit und der Drehzahl der Schnecke

405

Bremsvorgang mit Vorgabe der axialen Sollposition der Schnecke:   $s_{s\,(t)} = s_z - d_{s,b} + v_{r,b} * t - 0,5* a_s * t^2$

406

Rücklaufgeschwindigkeit als Resultierende aus Sollwertvorgabe der Position wird erfasst

407

Bremsvorgang der Schnecke rotativ mit Vorgabe Dosierdrehzahl $n_d$ (t)

*nein*

Prüfung ob Zieldosierweg erreicht?   $s_{ist}$ >= $s_{s,d}$

*ja*

408

Dosieren beendet

409   Fig. 4a

t1    t2

nd

nd bei vr,b +dv

nd bei vr,b -dv

vr,b

vr,b +dv

vr,b -dv

Fig. 4b

Bremsphase

Zielpunkt

t1    t2

nd

vr,b

vr,b +dv

vr,b -dv

Fig. 4c

Bremsphase

Zielpunkt

Dosieren mit programmierter pos. Drehzahl und programmierbarem
Staudruck von $s_{start}$ bis programmierter Dosierweg — 501

↓

Stoppen der axialen und rotativen Bewegung gemäß Fig 4a — 502

↓

Dosieren beendet
Vorhandener Staudruck kann unabhängig von rheologisch-dynamischen
Effekten gemessen werden — 503

↓

Initialisierung $\alpha_{ist}$ = 0; $\alpha_{z,Soll,int}$ = $\alpha_{z,Soll}$ ; $p_{s,Soll,int}$ = $p_{s,Soll}$
$\alpha_{z,Soll}$ = f(Material) bzw. editierbar
$p_{s,soll}$ = f(Material) bzw. editierbar — 504

↓

Druckentlastung durch drehen der Schnecke in negativer Richtung mit
Drehzahl $n_{r,1}$ und axialer Bewegung mit $v_{a,1}$ — 505

↓

Prüfung ob maximaler Drehwinkel erreicht $|\alpha_{ist}|$ >= $\alpha_{max,soll}$ — 506

*ja* ← | ↓ *nein*

Prüfung ob Zieldruck
unterschritten $p_{ist}$ <= $p_{s,soll}$ — 507    *nein*    $\alpha_{z,Soll,int}$ = $\alpha_{z,Soll}$ + $\alpha_{ist}$

↓ *ja*       *nein*

Prüfung interner Zieldrehwinkel
erreicht $|a_{ist}|$ >= $\alpha_{z,Soll,int}$ — 508

↓ *ja*

axiale und rotative Bewegung mit $v_{a,2}$ und $n = n_{r,2}$ — 509

↓

Prüfung ob Zielweg Dekompression erreicht? $s_{ist}$ >= $s_{s,de}$    *nein* — 510

↓ *ja*

Druckentlastung beendet — 511

Fig. 5

t11    t12

Gewicht

Dekompressionshub

Fig. 6a

Gewicht

Rückdrehwinkel

Fig. 6b

Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5002717 A
- EP 1465761 A1
- DE 102020124316 A1
- DE 102020003905 A1
- WO 2022102637 A1
- DE 102020005573 A1
- US 2021178649 A1
- JP 7108157 B